# EUROPÄISCHE PATENTSCHRIFT

(11) **EP 4 061 135 B1**
(45) Veröffentlichungstag und Bekanntmachung des Hinweises auf die Patenterteilung: **09.08.2023**
(21) Anmeldenummer: 21712951.9
(22) Anmeldetag: 05.03.2021
(51) Int. Cl.: A01N 63/12, A01N 25/28, A01P 7/04

(54) **FLÜSSIGKERNKAPSELN ZUR BEKÄMPFUNG VON SCHÄDLINGEN**
CAPSULES WITH LIQUID CORE TO COMBAT PESTS
CAPSULES À NOYAU LIQUIDE POUR COMBATTRE LES RAVAGEURS

(30) Priorität: 10.03.2020 DE 102020106533
(43) Veröffentlichungstag der Anmeldung: 28.09.2022
(73) Patentinhaber: Katz Biotech AG, 15837 Baruth/Mark (DE)
(72) Erfinder: HELLMUND, Markus, 12305 Berlin (DE); RADEMACHER, Jörg, 12277 Berlin (DE); HÄUSSLER, Andrea, 14480 Potsdam (DE)
(74) Vertreter: Sacht-Gorny, Gudrun
(86) Internationale Anmeldenummer: PCT/DE2021/100226
(87) Internationale Veröffentlichungsnummer: WO 2021/180272

(56) Entgegenhaltungen:
- WO-A1-03/059503
- WO-A1-2017/097282
- PATEL A V ET AL: "ENTRAPMENT OF BIOLOGICAL CONTROL AGENTS APPLIED TO ENTOMOPATHOGENIC NEMATODES", BIOTECHNOLOGY TECHNIQUES, CHAPMAN & HALL, Bd. 8, Nr. 8, 1. August 1994 (1994-08-01), Seiten 569-574, XP009002936, ISSN: 0951-208X, DOI: 10.1007/BF00152148
- IVAN HILTPOLD ET AL: "Capsules containing entomopathogenic nematodes as a Trojan horse approach to control the western corn rootworm", PLANT AND SOIL ; AN INTERNATIONAL JOURNAL ON PLANT-SOIL RELATIONSHIPS, KLUWER ACADEMIC PUBLISHERS, DO, Bd. 358, Nr. 1 - 2, 5. Mai 2012 (2012-05-05), Seiten 11-25, XP035104753, ISSN: 1573-5036, DOI: 10.1007/S11104-012-1253-0
- KIM JINWON ET AL: "Enhanced alginate capsule properties as a formulation of entomopathogenic nematodes", BIOCONTROL, KLUWER ACADEMIC PUBLISHERS, DORDRECHT, NL, Bd. 60, Nr. 4, 29. November 2014 (2014-11-29), Seiten 527-535, XP035507762, ISSN: 1386-6141, DOI: 10.1007/S10526-014-9638-Z [gefunden am 2014-11-29]
- AQUINO-BOLAÑOS TEODULFO ET AL: "Survival of Entomopathogenic Nematodes in Oil Emulsions and Control Effectiveness on Adult Engorged Ticks (Acari: Ixodida)", JOURNAL OF NEMATOLOGY., Bd. 51, 29. März 2019 (2019-03-29), Seiten 1-10, XP055804398, US ISSN: 0022-300X, DOI: 10.21307/jofnem-2019-001 Gefunden im Internet: URL:https://www.ncbi.nlm.nih.gov/pmc/artic les/PMC6929640/pdf/jofnem-51-001.pdf>
- CHENG HAO ET AL: "A peppermint oil emulsion stabilized by resveratrol-zein-pectin complex particles: Enhancing the chemical stability and antimicrobial activity in combination with the synergistic effect", FOOD HYDROCOLLOIDS, ELSEVIER BV, NL, vol. 103, 21 January 2020 (2020-01-21), XP086077343, ISSN: 0268-005X, DOI: 10.1016/J.FOODHYD.2020.105675 [retrieved on 2020-01-21]
- Anonymous: "Types of plant oils", Wikipedia, 28 November 2020 (2020-11-28), pages 1-2, XP55968934, Retrieved from the Internet: URL:https://en.wikipedia.org/wiki/Types_of _plant_oils [retrieved on 2022-10-07]
- Anonymous: "Öle", Wikipedia, 25 November 2019 (2019-11-25), pages 1-4, XP55968961, Retrieved from the Internet: URL:https://de.wikipedia.org/w/index.php?t itle=Öle&oldid=194375388 [retrieved on 2022-10-07]

## Beschreibung

Die vorliegende Erfindung betrifft Flüssigkernkapseln zur Bekämpfung von Schädlingen, wobei die Flüssigkernkapseln einen flüssigen Kern auf Basis einer Emulsion mit wenigstens einem pflanzlichen Öl und einer wässrigen Flüssigkeit mit entomopathogenen Nematoden und eine umgebende Hydrogel-Hülle aufweisen. Weiterhin betrifft die Erfindung ein Verfahren zur Herstellung derartiger Flüssigkernkapseln sowie ein Verfahren zur Schädlingsbekämpfung, bei dem diese Flüssigkernkapseln in einem Pflanzenbestand ausgebracht werden.

Nematoden (Fadenwürmer) sind fadenförmige Bodenlebewesen, die beispielsweise circa 0,5 mm Länge aufweisen. Sie gehören zu den artenreichsten mehrzelligen Lebewesen unserer Erde und kommen in allen erdenklichen Lebensräumen natürlicherweise vor. Als entomopathogene (entomon - griech. für Insekt) Nematoden (EPN) werden solchen Nematoden bezeichnet, die als natürliche Feinde von Insekten wirken und dabei die Insekten in der Regel als Wirtsorganismen nutzen oder allgemein schädigen. Die Bezeichnung entomopathogene Nematoden schließt im Sprachgebrauch der biologischen Schädlingsbekämpfung auch parasitäre Nematoden von Schnecken mit ein, da diese in ihrer Biologie, Vermehrung, Anwendung und Wirkung mit den insektenpathogenen Nematoden vergleichbar sind. Der Begriff der entomopathogenen Nematoden ist daher etwas weiter zu fassen, sodass hiervon nicht nur Nematoden umfasst sind, die Insekten schädigen. Neben den schneckenschädigenden Nematoden können hierunter beispielsweise auch räuberische Nematoden zu verstehen sein, die ihre Beute, beispielsweise andere Nematoden, aktiv erjagen und die ebenfalls in der biologischen Schädlingsbekämpfung, beispielsweise zur Bekämpfung von wurzelschädigenden Nematoden, eingesetzt werden.

Oftmals sind bestimmte Nematoden auf bestimmte Insekten oder Schnecken hoch spezialisiert, sodass sie nur die jeweiligen Arten befallen und damit für den Menschen, warmblütige Tiere und Pflanzen harmlos sind. Diese Eigenschaft macht die entomopathogenen Nematoden besonders geeignet für eine biologische Schädlingsbekämpfung.

Mittlerweile gehören die Nematoden im biologischen Pflanzenschutz zu den wichtigsten Gegenspielern von Insekten und Schnecken, die sich im oder auf dem Pflanzensubstrat (zum Beispiel Torf, Kompost, Mineralstoffe, Kunststoffe) aufhalten. In diesem Zusammenhang spielen vor allem die Larvenstadien vieler Käfer (Engerlinge) oder Fliegen (Maden) eine große Rolle, da diese Larvenstadien die Pflanze im Wurzelbereich erheblich schädigen können. Darüber hinaus können auch oberirdisch schädigende Insekten und Schnecken mithilfe von Nematoden bekämpft werden, wenn sich die Tiere zum Beispiel zur Verpuppung oder Eiablage in den Boden begeben, auf dem Boden bewegen oder auf einem anderen Weg für die Nematoden erreichbar sind. In der Regel suchen die entomopathogenen Nematoden ihre jeweiligen Wirtsorganismen aktiv auf und dringen in sie ein, sodass beispielsweise die befallenen Tiere (z. B. Larven) innerhalb von zwei bis drei Tagen in der Regel absterben. Die Nematoden vermehren sich anschließend in den Kadavern und befallen dann weitere lebende Larven bzw. die jeweiligen Wirtsorganismen. Dieser Prozess setzt sich so lange fort, bis keine lebenden Wirtsorganismen mehr von den Nematoden gefunden werden.

In der biologischen Schädlingsbekämpfung werden entomopathogene Nematoden bereits beispielsweise zur Bekämpfung der Engerlinge von Gartenlaubkäfer, Junikäfer, Dickmaulrüssler und Maiswurzelbohrer sowie zur Bekämpfung der Maden der Wiesenschnake und der Trauermücke sowie zur Bekämpfung der Raupen des Eichenprozessionsspinners, des Apfelwicklers und der Eulen-/Nachtfalter sowie zur Bekämpfung der Larven und Puppen von Thripsen sowie zur Bekämpfung von Acker- und Wegschnecken eingesetzt. Die Anwendungsbereiche liegen hierbei in der Pflege von Rasen und öffentlichem Grün, in Baumschulen, im Obstbau, im Gemüse-, Kräuter- und Zierpflanzenbau sowie im Maisanbau. Zu diesen Zwecken werden insbesondere die Nematodenarten *Heterorhabditis bacteriophora, Heterorhabditis downesi, Steinernema feltiae, Steinernema carpocapsae, Steinernema kraussei* und *Phasmarhabditis hermaphrodita* eingesetzt.

Die kommerzielle Massenproduktion von entomopathogenen Nematoden (EPN) erfolgt in der Regel mittels mikrobiologischer Verfahren in Flüssigkultur-Bioreaktoren (Fermentern).

Nach der Vermehrung werden die Nematoden üblicherweise in ein Tonmineralpulver eingebracht, beispielsweise etwa 7.500.000 Tiere/g. Dieses Tonmineralpulver dient als Trägermaterial, das in Beuteln portioniert werden kann. Bis zur Anwendung erfolgt zweckmäßigerweise eine gekühlte Lagerung zwischen etwa 4°C und 10°C. Für die überwiegende Anzahl der Schädlinge, die sich im Pflanzensubstrat aufhalten können, beträgt die bevorzugte Aufwandmenge nach derzeitigen Empfehlungen etwa 500.000 EPN/m².

Bei einer herkömmlichen Anwendung wird das Produkt, also die Mischung aus EPN und Tonmaterialpulver, in Wasser dispergiert und mittels Gieß- oder Sprühapplikation auf der zu behandelnden Fläche ausgebracht. Die benötigte Wassermenge beträgt abhängig vom Applikationsverfahren, den Umweltbedingungen und der zu behandelnden Kultur beispielsweise zwischen 100 und 5.000 ml/m². Um ein Absinken der Nematoden in der Dispersion zu verhindern, sollte die Dispersion während der Ausbringung regelmäßig durch Rühren oder Schütteln durchmischt werden. Dabei sollten jedoch starke Scherkräfte vermieden werden, um die Nematoden nicht zu schädigen. Nach der Behandlung muss das Pflanzensubstrat während des Bekämpfungszeitraums ausreichend feucht gehalten werden, da die Nematoden andernfalls schnell austrocknen können. Zudem können sich die Nematoden nicht auf trockenen Oberflächen bewegen, sodass das Aufsuchen der Wirte erschwert wird. Allerdings können Effekte wie das Ausschwemmen der Nematoden aus dem Bodensubstrat beispielsweise während des Gießens dazu führen, dass die Wirkung der Nematoden weiter reduziert wird.

In der Regel erfolgt die Behandlung mit entomopathogenen Nematoden zum Zeitpunkt des ersten Auftretens der zu bekämpfenden Schädlingsstadien. Ohne vorhandene Schädlinge können die entomopathogenen Nematoden in der Regel nur einige Tage im Substrat überdauern. Insgesamt erfordert eine erfolgreiche Behandlung mit entomopathogenen Nematoden also zum einen den richtigen Behandlungszeitpunkt, eine wirksame Applikationsmethode sowie eine ausreichende Feuchte des Pflanzensubstrats während des gesamten Bekämpfungszeitraums. In der Regel muss die Behandlung in regelmäßigen Abständen wiederholt werden.

Es existieren bereits Ansätze, entomopathogene Nematoden in anderen Darreichungsformen in einen Pflanzenbestand einzubringen. So beschreibt beispielsweise das Patent US 4,753,799 eine Verkapselung von Nematoden auf der Basis von Alginat. Zur Reduzierung von Wasserverlusten können die Kapseln beschichtet sein. Die WO 2016/176764 A1 hat ebenfalls Alginat-Kapseln mit Nematoden zum Gegenstand.

Die Alginat-Kapseln werden mit Cellulose beschichtet und getrocknet. Hierdurch wird eine Langzeitlagerung über mehrere Monate möglich. Problematisch bei derartigen verkapselten Nematoden ist jedoch, dass die Wirkung der ausgebrachten Kapseln bei der Schädlingsbekämpfung immer verhältnismäßig kurz ist. So beschreibt die WO 2016/176764 A1, dass die Kapseln innerhalb von einem Tag bis zu einer Woche abgebaut werden. Auch die Freisetzungsversuche, die in der US 4,753,799 angesprochen sind, werden nur für einen Zeitraum von 24 bis 48 Stunden durchgeführt.

Die WO 2017/097282 A1 beschreibt Flüssigkernkapseln zur Bekämpfung von Schädlingen, wobei die Kapseln einen wässrigen Kern, eine Hydrogelhülle und eine diffusionshemmende Außenhülle aufweisen.

Die WO 03/059503 A1 beschreibt Flüssigkernkapseln, die in einem wässrigen Kern die Nematoden *Steinernema feltiae* in einer Lösung mit Sucrose und Dextran in Wasser enthalten.

Patel und Vorlop (Biotechnology Techniques, Volume 8, No. 8, pp.569-574) beschreiben Flüssigkernkapseln mit infektiven Juvenilen von *Hetererorhabditis sp.* und Carboxymethylcellulose in Wasser, wobei die Hülle aus einem Hydrogel besteht.

Hiltpold et al. (Plant Soil (2012) 358:11-25) beschreiben Kapseln mit *Heterorhabditis bacteriophora,* wobei die Herstellung der Kapseln durch Eintropfen einer Zusammensetzung mit Calciumgluconolactat, Xanthangummi, einem Lebensmittelfarbstoff und den Nematoden in eine wässrige Lösung von Natriumalginat erfolgt. Kim et al. (BioControl (2015) 60:527-535) beschreiben vergleichbare Alginat-Kapseln mit *Heterorhabditis bacteriophora,* wobei die Kapseln mit einer CalciumchloridLösung zur Härtung der Kapseln nachbehandelt werden.

Zumindest derzeit ist kein Produkt mit partikelartig verkapselten Nematoden auf dem Markt.

Die Erfindung stellt sich demgegenüber die Aufgabe, die Verkapselung von Nematoden derart zu verbessern, dass mit der Ausbringung der Nematodenkapseln eine deutlich verlängerte Wirkung in der Schädlingsbekämpfung erreicht wird.

Diese Aufgabe wird durch Flüssigkernkapseln mit entomopathogenen Nematoden gelöst, wie sie sich aus dem Anspruch 1 ergeben. Bevorzugte Ausgestaltungen dieser Flüssigkernkapseln sind Gegenstand der abhängigen Ansprüche. Weiterhin wird diese Aufgabe durch ein Verfahren zur Herstellung von derartigen Flüssigkernkapseln sowie durch ein Verfahren zur Schädlingsbekämpfung gelöst, wie es sich aus den anderen unabhängigen Ansprüchen und den davon abhängigen Ansprüchen ergibt.

Die vorgeschlagenen Flüssigkernkapseln zur Bekämpfung von Schädlingen weisen einen flüssigen Kern mit entomopathogenen Nematoden sowie eine umgebende Hydrogel-Hülle auf. Ein wichtiger Punkt der Erfindung ist, dass der flüssige Kern auf Basis einer Emulsion mit wenigstens einem pflanzlichen Öl und einer wässrigen Flüssigkeit gebildet ist. In überraschender Weise konnten die Erfinder zeigen, dass durch die Emulsion im Kern der Kapseln die entomopathogenen Nematoden wesentlich vitaler und längerfristig aktiv im Vergleich mit herkömmlichen Nematodenprodukten sind. Damit ist es möglich, dass die Freisetzung der Nematoden aus den Flüssigkernkapseln nach deren Ausbringung in einen Pflanzenbestand über einen erheblich längeren Zeitraum erfolgen kann, als es bei herkömmlichen Nematodenprodukten möglich ist. Beispielsweise erlauben die erfindungsgemäßen Flüssigkernkapseln eine Freisetzung der Nematoden über einen Zeitraum von über vier Wochen. Dadurch verlängert sich der Wirkungszeitraum entsprechend. Die Notwendigkeit von weiteren Nachbehandlungen mit einer erneuten Ausbringung der Kapseln während der Kulturzeit wird deutlich reduziert oder es kann sogar ganz auf Nachbehandlungen verzichtet werden. Die Emulsion im Kern hat weiterhin den besonderen Vorteil, dass die Nematoden in den Kapseln besser vor einer Austrocknung geschützt sind und somit trockene Phasen im Pflanzensubstrat besser überstehen können. Hierdurch ergibt sich eine erhöhte Wirksicherheit bei der Anwendung der erfindungsgemäßen Flüssigkernkapseln.

Allgemein hat die Verwendung von verkapselten Nematoden den besonderen Vorteil, dass sich die Kapseln besonders auf kleinen Flächen und in Einzeltöpfen genauer dosieren lassen als zum Beispiel mit einer herkömmlichen Gießanwendung. Hierdurch werden Unterdosierungen und Überdosierungen vermieden, wodurch sich auf der einen Seite die Wirksicherheit erhöht. Auf der anderen Seite ergeben sich durch die Vermeidung von Überdosierungen weitere Kostenvorteile. Ebenfalls im Vergleich mit beispielsweise einer herkömmlichen Gießapplikation von Nematoden sind die Nematoden in den Flüssigkernkapseln besser vor Scherkräften geschützt. Auch treten keine Konzentrationsänderungen durch Absinken der Nematoden in der Formulierung auf. Weiterhin ist die verwendete Wassermenge bei der Applikation der Flüssigkernkapseln wesentlich geringer als beispielsweise bei einer Gießanwendung. Des Weiteren verbleibt durch die Verkapselung das Wasser bzw. die flüssige Phase im direkten Umfeld der Nematoden und verteilt sich nicht im Boden, wie beispielsweise bei einer Gießanwendung. Dadurch sind die Nematoden besser vor Austrocknung geschützt.

Der Ölanteil in den Flüssigkernkapseln bzw. der Einsatz einer Emulsion im flüssigen Kern der erfindungsgemäßen Kapseln hat den weiteren entscheidenden Vorteil, dass hierdurch die Form der Kapseln während der Herstellung maßgeblich stabilisiert wird. Sie haben im Vergleich zu Kapseln ohne Ölanteil im Kern eine wesentlich gleichmäßigere, runderer Form. Durch den mit der Emulsion einhergehenden reduzierten Volumenverlust durch Wasserverdunstung bleiben die Kapseln auch langfristiger formstabil. Dies ist zum einen ein Vorteil bei der Anwendung der Flüssigkernkapseln im Pflanzenschutz, aber auch bei der Lagerung der Flüssigkernkapseln vor ihrer Anwendung. So wurde von den Erfindern festgestellt, dass die Kapseln bei gekühlter Lagerung in verschlossenen und vorzugsweise belüfteten Behältern über Monate formstabil bleiben. In derartigen Behältern können die erfindungsgemäßen Flüssigkernkapseln sogar auch bei Raumtemperatur ohne erhöhten Wasserverlust längerfristig gelagert werden. Die Lagerung bei Raumtemperatur sollte vorzugsweise mit besonders guter Belüftung erfolgen. Für eine Lagerung über einen Zeitraum von mehreren Monaten kann es sinnvoll sein, die Kapseln oberflächlich mit Wasser zu benetzen. Eine besonders lange Lagerung ist bei einer Kühlung, beispielsweise zwischen 4°C und 10°C, möglich. Unter diesen Bedingungen ist der Sauerstoffbedarf der Nematoden reduziert, sodass sich die Vitalität der Nematoden über einen sehr langen Zeitraum erhalten lässt. Die Kühlung hat darüber hinaus den Vorteil, dass das Wachstum von störenden Mikroorganismen, beispielsweise von Schimmelpilzen, erheblich verlangsamt wird.

Die erfindungsgemäßen Flüssigkernkapseln sind ohne weitere Modifikationen zum Beispiel in der Landwirtschaft oder im Gartenbau direkt einsetzbar und können beispielsweise mit mechanischen Hilfsmitteln in den Pflanzenbestand ausgebracht werden. Die besonders stabile Form der erfindungsgemäßen Flüssigkernkapseln bietet bereits bei der mechanisierten Ausbringung des Produktes Vorteile, da durch die gute Stabilität und die hierdurch mögliche Standardisierung des Produktes die Maschinengängigkeit, beispielsweise bei der Ausbringung mit Streugeräten, sehr gut ist. Infolge der überraschend positiven Wirkung der Emulsion im Kern der Kapseln auf die Vitalität der Nematoden bleiben die Nematoden nach der Ausbringung der Flüssigkernkapseln in einen Pflanzenbestand über mehrere Wochen annähernd gleich aktiv, wobei die Nematoden fortlaufend aus den Flüssigkernkapseln austreten. Durch diese verzögerte Freisetzung bleibt die Wirkung der Nematoden auf die Schädlinge über einen langen Zeitraum, beispielsweise bis zu vier Wochen, erhalten. Zu dieser Langzeitwirkung der Flüssigkernkapseln in der Anwendung trägt zum einen die Emulsion bei, da hierdurch die Wasserverdunstung reduziert ist. Zum anderen bietet die Hydrogel-Hülle einen zusätzlichen Austrocknungsschutz, wobei, je nach Anwendung, der Austrocknungsschutz der Hydrogel-Hülle durch weitere Maßnahmen verstärkt werden kann, zum Beispiel durch Erhöhung der Wandstärke oder durch den Einsatz von Additiven in der Hülle.

Versuche der Erfinder konnten zeigen, dass durch die Verwendung einer Emulsion im Kern der erfindungsgemäßen Flüssigkernkapseln die Austrocknung der Nematoden in der Kapsel im Vergleich mit einer Flüssigkernkapsel mit nur Wasser im Kern (ohne Emulsion) deutlich reduziert ist. Während eine Flüssigkernkapsel mit einem wässrigen Kern innerhalb weniger Stunden vollständig austrocknet, bleibt eine erfindungsgemäße Flüssigkernkapsel mit einem Kern auf der Basis einer Emulsion über mehrere Tage formstabil, jeweils in einem offenen System bei Raumtemperatur. Auch nach Trocknungsphasen, die einen fast vollständigen Wasserverlust der Kapsel zur Folge haben, verbleit ein Wasserfilm im direkten Umfeld der Nematoden. Vergleichbar mit einer Wasser-in-Öl-Emulsion bildet das Öl eine Diffusionsbarriere für das Wasser. Zugesetzte Emulgatoren, beispielsweise E405, stabilisieren diesen Zustand noch. Ein gewisser Mindestanteil von Wasser im Kern bei der Herstellung der Flüssigkernkapseln, insbesondere mindestens 30 %, ist dabei besonders vorteilhaft, da dies zum Einen einen für das Überleben der Nematoden erforderlichen umgebenden Wasserfilm gewährleistet und zum Anderen aus prozesstechnischen Gründen für die Ausbildung der Hydrogel-Hülle sehr zweckmäßig ist. Insgesamt bietet daher die erfindungsgemäße Flüssigkernkapsel mit dem Kern auf der Basis einer Emulsion den Nematoden im Kern genügend Feuchtigkeit zum Überleben, sodass die Nematoden in der Anwendung über einen langen Zeitraum aus den Flüssigkernkapseln austreten können.

Bei dem Öl als Bestandteil der Emulsion handelt es sich erfindungsgemäss um ein pflanzliches Öl beispielsweise um Sonnenblumenkernöl und/oder Rapskernöl und/oder Olivenöl. Auch Kombinationen verschiedener Öle sind möglich. Prinzipiell ist beispielsweise auch der Einsatz von Duftölen als Bestandteil der Emulsion möglich. Allgemein können vorzugsweise solche Öle verwendet werden, die bei Temperaturen ab circa 0°C flüssig sind. Auch wenn der Einsatz der Flüssigkernkapseln im Pflanzenschutz in der Regel bei höheren Temperaturen erfolgt, ist die Verwendung von Ölen, die bei niedrigeren Temperaturen noch flüssig sind, insbesondere im Hinblick auf die Lagerung der Flüssigkernkapseln bei niedrigen Temperaturen, beispielsweise bei Kühlschranktemperaturen (4 - 10 °C), vorteilhaft für die Vitalität der Nematoden.

Vorzugsweise werden solche Öle eingesetzt, die beispielsweise noch bei Temperaturen bis zu -15 °C oder bis zu -20 °C flüssig sind.

In bevorzugter Weise beträgt der Anteil des Öls an der Emulsion wenigstens 10 %. Vorzugsweise liegt der maximale Anteil des Öls an der Emulsion bei 70 % (w/w). Beispielsweise kann der Anteil des Öls an der Emulsion 10 % oder 15 % oder 20 % oder 30 % oder 40 % oder 50 % oder 60 % oder 70 % (jeweils w/w) betragen. Bei der Herstellung der Flüssigkernkapseln wird für die Bereitstellung der Mischung für den Kern vorzugsweise eine Aufschwemmung der Nematoden bzw. des Nematodenproduktes in Wasser mit der Emulsion gemischt. Daher ergibt sich für den Anteil des Öls in dem Kern der Flüssigkernkapseln in der Regel ein geringfügig reduzierter Anteil. Vorzugsweise sollte der Anteil des Öls in dem flüssigen Kern jedoch nicht unter 15 % liegen. Beispielsweise kann der Anteil des Öls im Kern in einem Bereich zwischen 19 und 68 %, insbesondere zwischen 19,4 und 67,9 %, liegen.

Bei der wässrigen Komponente (wässrige Flüssigkeit) der Emulsion kann es sich insbesondere um Wasser handeln, beispielsweise um Leitungswasser oder um aufbereitetes Wasser, beispielsweise entsalztes Wasser. Weiterhin eignen sich prinzipiell auch isotonische Salzlösungen, die der physiologischen Osmolarität der Nematoden entsprechen. In bevorzugten Ausführungsformen kann das Wasser für die Emulsion mit Sauerstoff angereichert werden. Dies kann sich weiter vorteilhaft auf die Vitalität der Nematoden auswirken.

Bei der umgebenden Hydrogel-Hülle handelt es sich vorzugsweise um eine Alginat-Hülle, beispielsweise um eine Calciumalginat-Hülle. Eine Alginat-Hülle eignet sich in ganz besonderer Weise für die erfindungsgemäße Flüssigkernkapseln, da zum einen die Herstellung derartiger Flüssigkernkapseln prozesstechnisch sehr gut zu realisieren ist. Zum anderen sind die Bestandteile der Alginat-Hülle nach der Ausbringung in ein Pflanzensubstrat sehr gut biologisch abbaubar und hinterlassen keine problematischen Rückstände.

In besonders bevorzugten Ausführungsformen umfassen die erfindungsgemäßen Flüssigkernkapseln eine Kapselhülle aus einem Hydrogel auf Alginatbasis, wobei sich im flüssigen Kapselkern Wasser, Pflanzenöl und die Nematoden befinden. Als Hilfsstoffe können Salze und ein oder mehrere Emulgatoren vorgesehen sein. Vorzugsweise werden ausschließlich lebensmitteltaugliche Substanzen für die Kapseln verwendet, sodass die Kapseln vollständig biologisch abbaubar sind.

In bevorzugten Ausführungsformen kann die Hydrogel-Hülle wenigstens ein Additiv enthalten. Durch ein oder mehrere Additive können die Eigenschaften der Hydrogel-Hülle an verschiedene Anwendungen angepasst werden, beispielsweise kann hierdurch ein weiterer Verdunstungsschutz gewährleistet werden. Geeignet als Additive sind beispielsweise Cellulose-basierte Verbindungen, vorzugsweise Methylcellulose. Andere mögliche Additive sind Verdickungsmittel, wie beispielsweise Xanthan und/oder Johannisbrotkernmehl. Auch diese Verdickungsmittel können mit Vorteil eingesetzt werden, um die Eigenschaften der Hydrogel-Hülle in positiver Weise zu beeinflussen.

In bevorzugter Weise sind in den einzelnen Flüssigkernkapseln im Durchschnitt etwa 1.000 bis 15.000 Nematoden pro Flüssigkernkapsel enthalten. Besonders bevorzugt sind etwa 1.500 bis 7.500 Nematoden pro Flüssigkernkapsel, beispielsweise 2.000 bis 7.500 Nematoden pro Flüssigkernkapsel. Es kann auch bevorzugt sein, dass weniger Nematoden pro Flüssigkernkapsel enthalten sind, beispielsweise zwischen 1.000 und 2.000 Nematoden pro Flüssigkernkapsel. Wenn die Nematoden beispielsweise in Pflanztöpfe ausgebracht werden sollen, kann es vorteilhaft sein, mehr Kapseln mit jeweils weniger Nematoden als nur wenige Kapseln mit jeweils vielen Nematoden zu verwenden. Der Hintergrund dabei ist, dass es beispielsweise bei einer maschinellen Ausbringung passieren kann, dass die vorgesehene Anzahl von auszubringenden Kapseln nicht genau getroffen wird. Umso mehr Nematoden in der einzelnen Kapsel enthalten sind und umso weniger Kapseln für die vorgesehene Dosierung ausgebracht werden sollen, umso größer ist die Dosierungsabweichung, wenn eine Kapsel zu viel oder zu wenig ausgebracht wird. Vor diesem Hintergrund kann beispielsweise eine Anzahl von 1.500 bis 2.000 Nematoden, insbesondere circa 1.600 Nematoden pro Flüssigkernkapsel besonders bevorzugt sein. Allgemein gilt, dass eine genaue Zählung und Dosierung der Nematoden in der Praxis schwierig ist, sodass diese Angaben gewissen Schwankungen unterliegen und beispielsweise mit mittleren Abweichungen ± 20 % zu verstehen sind. Gegebenenfalls können die Abweichungen auch höher sein.

Die Flüssigkernkapseln können im Durchschnitt beispielsweise einen Durchmesser zwischen 1 bis 30 mm aufweisen, vorzugsweise zwischen 3 bis 10 mm oder zwischen 5 bis 10 mm. Umso größer die Kapseln sind, umso mehr Nematoden können in den Flüssigkernkapseln im Allgemeinen enthalten sein. Wie bereits im Zusammenhang mit der Anzahl der Nematoden pro Flüssigkernkapsel erläutert, kann es auch in Bezug auf die Größe der Flüssigkernkapseln vorteilhaft sein, die Kapseln verhältnismäßig klein zu gestalten, sodass mögliche Dosierungsfehler minimiert werden. Eine besonders bevorzugte Größe der Flüssigkernkapseln vor diesem Hintergrund ist ein Durchmesser von 3 bis 6 mm bzw. von 4,5 ± 1,5 mm. Die Größe der Kapseln kann ohne Weiteres in dem Herstellungsprozess der Flüssigkernkapseln gesteuert werden, wie es nachfolgend im Zusammenhang mit dem Herstellungsverfahren für die Flüssigkernkapseln noch näher erläutert werden wird.

Vorzugsweise beträgt das Gewicht pro Flüssigkernkapsel im Durchschnitt zwischen 10 bis 100 mg, vorzugsweise zwischen 20 und 80 mg, insbesondere zwischen 40 bis 80 mg. Besonders bevorzugt ist ein Gewicht in einem Bereich von 40 bis 60 mg pro Flüssigkernkapsel, besonders bevorzugt etwa 50 mg pro Flüssigkernkapsel. Diese Angaben beziehen sich jeweils auf das Feuchtgewicht. Auch das Gewicht der Flüssigkernkapseln kann im Zuge des Herstellungsverfahrens der Flüssigkernkapseln variiert werden und damit an verschiedene Applikationsarten der Flüssigkernkapseln angepasst werden. Mit der Größe und dem Gewicht kann auch die Anzahl der Nematoden pro Flüssigkernkapsel bzw. die Beladung der Flüssigkernkapseln mit Nematoden anwendungsspezifisch angepasst werden. So können beispielsweise Flüssigkernkapseln, die in einzelne Pflanztöpfe, beispielsweise per Hand, eingebracht werden, größer ausgestaltet werden und mehr Nematoden enthalten als Flüssigkernkapseln, die beispielsweise mechanisch mit einem Streugerät auf einer großen Fläche verteilt werden. So eignen sich größere Flüssigkernkapseln im Allgemeinen für die Dosierung von einzelnen oder wenigen Kapseln, beispielsweise bei drei Kapseln pro Pflanztopf. Im Hinblick auf die Verringerung von Dosierungsfehlern insbesondere bei einer maschinellen Ausbringung der Kapseln können kleinere Kapseln gegenüber größeren Kapseln bevorzugt sein.

In einer weiteren bevorzugten Ausgestaltung der Flüssigkernkapseln enthalten die Flüssigkernkapseln weiterhin wenigstens einen Lockstoff für die zu bekämpfenden Schädlinge. Durch einen Lockstoff wird erreicht, dass die Schädlinge, also die Zielinsekten der Nematoden oder gegebenenfalls die Schnecken, gewissermaßen von den Flüssigkernkapseln angezogen werden, sodass die aus den Flüssigkernkapseln austretenden Nematoden die Insekten oder Schnecken wesentlich einfacher erreichen können. Beispielsweise eignen sich als Lockstoffe ätherische Öle. Als besonders vorteilhaft hat sich Minzöl erwiesen, das sehr attraktiv für die Larven der Trauermücke ist. In der Regel sind sehr geringe Konzentrationen eines Lockstoffs und insbesondere eines ätherischen Öls ausreichend. Beispielsweise kann 0,1 bis 1 ml, vorzugsweise 0,3 ml Minzöl für die Herstellung von 1 kg Flüssigkernkapseln zugesetzt werden, was im Allgemeinen für eine besonders vorteilhafte Lockwirkung auf die Trauermückenlarven ausreichend ist. Der Lockstoff und insbesondere das ätherische Öl kann beispielsweise während der Herstellung der Emulsion bzw. als Bestandteil der Emulsion zugesetzt werden. Hierfür kann das ätherische Öl als zusätzliches Öl in der Emulsion eingesetzt werden.

Als entomopathogene Nematoden in den erfindungsgemäßen Flüssigkernkapseln kommen verschiedene Nematoden infrage. Besonders geeignet sind beispielsweise die Arten *Steinernema carpocapsae* und/oder *Steinernema feltiae* und/oder *Steinernema kraussei* und/oder *Heterorhabditis bacteriophora* und/oder *Heterorhabditis downesi* und/oder *Phasmarhabditis hermaphrodita.* Diese Nematoden haben sich in der biologischen Schädlingsbekämpfung bereits bewährt und können in sehr effektiver Weise zur Bekämpfung verschiedener Schädlinge eingesetzt werden. Die folgende Tabelle fasst die verschiedenen Anwendungsbereiche und die dort anzutreffenden Schädlinge im Hinblick auf die zu deren Bekämpfung geeigneten Nematodenarten zusammen.

| **Anwendungsbereich** | **Schädling** | **Nematodenart** |
|---|---|---|
| Rasen | Gartenlaubkäfer, Junikäfer, Maikäfer (Engerlinge) | *Heterorhabditis bacteriophora* |
| | Wiesenschnake (Made) | *Heterorhabditis downesi* |
| Öffentliches Grün | Eichenprozessionsspinner | *Steinernema feltiae* |
| Baumschulen | Dickmaulrüssler, Gartenlaubkäfer (Engerlinge) | *Heterorhabditis bacteriophora* |
| | | *Heterorhabditis downesi Steinernema kraussei* |
| Obstbau | Apfelwickler (Raupe) | *Steinernema feltiae* |
| Gemüse-, Kräuter- und Zierpflanzenanbau | Eulen-/Nachtfalter (Raupe) | *Steinernema feltiae* |
| | Trauermücke (Made) | *Steinernema carpocapsae* |
| | Thripse (Larve, Puppe) | |
| | Acker-/Wegschnecken | *Phasmarhabditis hermaphrodita* |
| Maisanbau | Maiswurzelbohrer (Engerling) | *Heterorhabditis bacteriophora* |

Die erfindungsgemäßen Flüssigkernkapseln können beispielsweise mit besonderem Vorteil für die Verkapselung von *Steinernema feltiae* eingesetzt werden, die zur Bekämpfung von Trauermücken und insbesondere von den Larven der Trauermücken verwendet werden.

Die Erfindung umfasst weiterhin ein Pflanzensubstrat, das die erfindungsgemäßen Flüssigkernkapseln bereits enthält. Ein derartiges Pflanzensubstrat kann beispielsweise für das Ein- und Umtopfen von Gemüsepflanzen, Kräutern oder Zierpflanzen mit Vorteil eingesetzt werden, wobei ein aufkommender Schädlingsbefall sofort bekämpft wird. Dies ist insbesondere dann besonders vorteilhaft, wenn die Pflanzen bereits vor dem Ein- oder Umtopfen Kontakt mit Schädlingen hatten. Für die Einmischung der erfindungsgemäßen Flüssigkernkapseln in ein Pflanzensubstrat eignen sich insbesondere Flüssigkernkapseln mit einer relativ hohen Nematodendichte. Beispielsweise können hierfür Flüssigkernkapseln mit circa 7.200 Tieren pro Flüssigkernkapsel verwendet werden. Das entspricht etwa 50 Mio. EPN/kg Kapseln. Für die Herstellung des Pflanzensubstrats können die unterschiedlichen, an sich üblichen Bestandteile des Substrats (z.B. Weißtorf, Schwarztorf, Wasser, kohlensaurer Kalk, Dünger, Netzmittel) gemischt und anteilig mit beispielsweise circa 100 g Kapseln pro m³ Substrat versetzt werden.

Die Erfindung umfasst weiterhin ein Verfahren zur Herstellung von Flüssigkernkapseln gemäß der obigen Beschreibung, wobei die herzustellenden Flüssigkernkapseln einen flüssigen Kern mit entomopathogenen Nematoden und eine umgebende Hydrogel-Hülle aufweisen und wobei der flüssige Kern auf der Basis einer Emulsion mit wenigstens einem pflanzlichen Öl und einer wässrigen Flüssigkeit gebildet ist. Für die Herstellung dieser Flüssigkernkapseln wird die Emulsion mit den Nematoden in eine Hydrokolloid-Lösung in Gegenwart von zweiwertigen Ionen eingetropft. Dieses im Prinzip als inverse Mikroverkapselung bekannte Verfahren erlaubt die Herstellung von Flüssigkernkapseln mit Nematoden im flüssigen Kern, wobei sich die Nematoden durch eine besonders langfristige Vitalität und Aktivität während der Anwendung dieser Flüssigkernkapseln bei der Schädlingsbekämpfung über mehrere Wochen hinweg auszeichnen. Dieses Herstellungsverfahren erlaubt eine Steuerung der Kapselgröße und des Gewichts der Kapseln sowie eine Einstellung der Nematodenbeladung der Kapseln, sodass die Flüssigkernkapseln an verschiedene Anwendungen angepasst werden können.

Insgesamt bieten die mit diesem Verfahren herstellbaren Flüssigkernkapseln für eine biologische Schädlingsbekämpfung einen kontinuierlichen Vorrat an Nematoden im Pflanzensubstrat und damit einen effektiven Schutz des Pflanzenbestandes über mehrere Wochen. Da die Nematoden über einen längeren Zeitraum kontinuierlich aus den Flüssigkernkapseln austreten können, ist eine Langzeitwirkung bei der Anwendung dieser Flüssigkernkapseln gegeben. Der Aufbau der Kapseln und insbesondere die im flüssigen Kern enthaltene Emulsion führt zu einer verzögerten Austrocknung der Nematoden, sodass lebende und aktive Nematoden über Wochen aus den Kapseln austreten können und damit kontinuierlich freigesetzt werden. Darüber hinaus bieten die erfindungsgemäß hergestellten Flüssigkernkapseln eine gute mechanische Stabilität, die eine einfache Handhabung und eine gute Lagerfähigkeit ohne Schimmelbefall erlauben. Das Verfahren bietet darüber hinaus den Vorteil, dass die Kapseln insbesondere durch Anpassungen der Hydrogel-Hülle an verschiedene Anforderungen anpassbar sind. Beispielsweise kann die Wandstärke der Hülle und deren Festigkeit durch Additive beeinflusst werden. Durch die in den Flüssigkernkapseln infolge der enthaltenen Emulsion gewährleisteten gleichbleibenden Bedingungen für die Nematoden und die langfristige bzw. verzögerte Freisetzung der Nematoden erlaubt die Anwendung der Flüssigkernkapseln im Pflanzenbestand eine weitgehend gleichbleibende Konzentration von Nematoden im Pflanzensubstrat, selbst bei Effekten wie beispielsweise einer Ausschwemmung der bereits ausgetretenen Nematoden aus dem Bodensubstrat, beispielsweise bei Ebbe/Flut-Systemen in der Pflanzenkultur.

Für die Herstellung der Flüssigkernkapseln wird das Material für die Hülle als Hydrokolloid-Lösung vorgelegt. Die Flüssigkeit für den Kern wird in diese Hydrokolloid-Lösung eingetropft. Die Hydrokolloid-Lösung enthält vorzugsweise Alginat, insbesondere Natriumalginat (E401) und gegebenenfalls weitere Additive. Die Flüssigkeit für den Kern enthält vorzugsweise zweiwertige Ionen, insbesondere Calciumionen, beispielsweise in Form von Calciumchlorid oder Calciumlactat. Calciumchlorid oder Calciumlactat kann beispielsweise in einer Konzentration von mindestens 1 Gew.-% bis maximal 5 Gew.-% zugesetzt werden. In der Regel werden beispielsweise mit 1 Gew.-% Calciumchlorid gute Ergebnisse bei der Verkapselung erzielt. Wenn diese Flüssigkeit für den Kern in die Alginat-Lösung eingetropft wird, bildet sich spontan eine Hülle um die in die Hydrokolloid-Lösung eindringenden Tropfen aus. Die Alginat-Lösung kann beispielsweise zwischen 0,5 und 5 Gew.-% E401, vorzugweise 1 Gew.-% E401, in Wasser enthalten. Als Additive oder Stabilisatoren können beispielsweise Methylcellulose und/oder Xanthan und/oder Johannisbrotkernmehl zugesetzt werden. Diese Zusätze haben bereits in sehr geringen Konzentrationen sehr gute Auswirkungen auf die Stabilisierung, beispielsweise können die Additive in Konzentrationen zwischen 0,125 Gew.-% bis zu 1 Gew.-% zugesetzt werden, wobei Xanthan und Johannisbrotkernmehl bereits in sehr geringen Konzentrationen und Methylcellulose in etwas höheren Konzentrationen gute Wirkungen erzielt.

Die Flüssigkeit für den Kern basiert auf der Emulsion (pflanzliches Öl und wässrige Flüssigkeit, z. B. Wasser) und den zuzusetzenden Nematoden. Die Nematoden können beispielsweise mit Wasser aufgeschwemmt und der Emulsion zugesetzt werden.

Vorzugsweise wird die Emulsion mit einem Anteil des Öls zwischen 20 % und 70 % und Wasser hergestellt. Bei dem Wasser kann es sich um Leitungswasser, aber beispielsweise auch um behandeltes Wasser, wie Reinstwasser oder voll entsalztes Wasser, handeln. Statt des Wassers können beispielsweise auch isotonische Salzlösungen eingesetzt werden. Als pflanzliche Öle kommen verschiedene Öle oder flüssige Speisefette infrage, insbesondere Sonnenblumenkernöl, Rapskernöl, Olivenöl oder anderes. Auch spezielle Öle wie zum Beispiel Duftöle können als Komponente der Ölfraktion verwendet werden. Zur Stabilisierung der Emulsion ist der Zusatz von Emulgatoren vorteilhaft, wie zum Beispiel Sonnenblumenlecithin, Sojalecithin, Propylenglycoalginat (E405), Kieselsol oder anderes. Die Emulsion selbst kann durch schnelles Rühren hergestellt werden. Besonders vorteilhaft ist die Verwendung eines Dispergiergerätes, beispielsweise eines ULTRA-TURRAX^{®} (IKA-Werke GmbH & Co. KG, Deutschland) oder ähnlicher Geräte.

Für die Herstellung der Flüssigkernkapseln können prinzipiell handelsübliche Nematodenprodukte eingesetzt werden, die beispielsweise mit Tonmineralpulver als Träger oder anderen Trägermaterialien angeboten werden. Auch Nematodenprodukte auf der Basis von Öl können für die erfindungsgemäßen Flüssigkernkapseln eingesetzt werden. Hierfür kann das jeweilige Nematodenprodukt beispielsweise mit Wasser aufgeschwemmt und mit der vorab hergestellten Emulsion aus pflanzlichem Öl und Wasser gemischt werden, bis eine homogene Mischung entsteht. Diese Mischung kann mit zweiwertigen Ionen, beispielsweise durch Zusatz von Calciumchlorid oder Calciumlactat, versetzt werden und wird anschließend in die vorgelegte Hydrokolloid-Lösung eingetropft. Nach der Eintropfung der Kernflüssigkeit in die Hydrokolloid-Lösung und nach Ausbildung der Hydrogel-Hüllen um die Tropfen können die entstandenen Flüssigkernkapseln abgesiebt und mit Wasser gespült werden.

Die hergestellten Flüssigkernkapseln können über einen langen Zeitraum, beispielsweise mindestens bis zu 2 Monaten, gelagert werden, wobei eine gekühlte Lagerung bevorzugt ist. Insbesondere bei einer gekühlten Lagerung bleiben die Nematoden über einen sehr langen Zeitraum vital. Selbstverständlich können die hergestellten Flüssigkernkapseln auch mehr oder weniger sofort für die biologische Schädlingsbekämpfung eingesetzt werden. Auch eine Lagerung bei Raumtemperatur über einen längeren Zeitraum, beispielsweise bis zu 6 Wochen, ist möglich.

Weiterhin umfasst die Erfindung ein Verfahren zur Schädlingsbekämpfung, bei dem die oben beschriebenen Flüssigkernkapseln in einen Pflanzenbestand ausgebracht werden.

Zudem umfasst die Erfindung die Verwendung der beschriebenen Flüssigkernkapseln zur Schädlingsbekämpfung. Bei diesem Verfahren zur Schädlingsbekämpfung zeigen sich die besonders vorteilhaften Eigenschaften der beschriebenen Flüssigkernkapseln, da durch die im Kern enthaltene Emulsion dieser Kapseln eine sehr langfristige Wirkung der Kapseln in der Schädlingsbekämpfung möglich wird. Die Emulsion im Kern führt dazu, dass die Kapseln durch eine verringerte Verdunstung über einen langen Zeitraum stabil bleiben und darüber hinaus wirkt sich die Emulsion sehr positiv auf die Vitalität der Nematoden aus, sodass auch eine langfristige Freisetzung und Aktivität der Nematoden gewährleistet ist. Dies führt insgesamt dazu, dass aktive Nematoden über einen Zeitraum von mehreren Wochen, beispielsweise bis zu vier Wochen, aus den Kapseln austreten und schädigend auf ihre jeweiligen Zielinsekten oder gegebenenfalls auf die Schnecken wirken können.

Zur Verwendung in der Schädlingsbekämpfung werden die Flüssigkernkapseln zweckmäßigerweise auf oder in das Pflanzensubstrat eingebracht. Die Einbringung kann auf verschiedene Weise erfolgen. Im einfachsten Fall werden die Flüssigkernkapseln manuell aufgestreut und gegebenenfalls in das Substrat eingearbeitet oder durch eine weitere aufgestreute Substratschicht bedeckt. Beispielsweise können die Flüssigkernkapseln in die oberen zehn Zentimeter der Substratschicht eingearbeitet werden. Im Allgemeinen ist es vorteilhaft, wenn die Flüssigkernkapseln gleichmäßig in der Substratschicht verteilt werden. Zur Ein- oder Aufbringung der Flüssigkernkapseln können auch technische Hilfsmittel eingesetzt werden, beispielsweise üblicherweise verwendete Pflanz- oder Düngertechnik, zum Beispiel Saatgeräte, Düngerstreuer, Düngerlanzen, Topfmaschinen oder Substratmischer. In einer besonders vorteilhaften Ausführungsform des Verfahrens zur Schädlingsbekämpfung können die Flüssigkernkapseln bei einer Erstbehandlung auch bereits vor der Pflanzung oder Aussaat der Kultur in das Pflanzensubstrat eingemischt werden. Diese Ausführungsform kann beispielsweise in der Kräuteranzucht mit großem Vorteil eingesetzt werden. Hierbei werden die Nematoden in Form der Flüssigkernkapseln im Pflanzensubstrat quasi deponiert. Wenn dann nach ein bis zwei Wochen die Pflanzen gewachsen sind und die ersten Schädlinge auftreten, sind die entomopathogenen Nematoden bereits präsent. Auch hierin liegt ein besonderer Vorteil der erfindungsgemäßen Flüssigkernkapseln, da die langfristige und verzögerte Freisetzung aus den Flüssigkernkapseln über mehrere Wochen eine solche prophylaktische Behandlung erst ermöglicht.

Insgesamt erlauben die erfindungsgemäßen Flüssigkernkapseln ein Verfahren zur Schädlingsbekämpfung, das erhebliche Vorteile bietet. Insbesondere wird die Anzahl der notwendigen Behandlungen reduziert und damit der Arbeitsaufwand verringert. Mit den erfindungsgemäßen Flüssigkernkapseln werden ein erhöhter Wirkungsgrad und eine erhöhte Wirksicherheit erreicht. Besonders bevorzugte Anwendungsbereiche finden sich dabei insbesondere im gewerblichen Anbau beispielsweise von Kräutern und Zierpflanzen, beispielsweise Orchideen oder Poinsettien. Auch im Hobbybereich, insbesondere bei Kübelpflanzen, können die Flüssigkernkapseln mit besonderem Vorteil eingesetzt werden. Hierbei können die Flüssigkernkapseln entweder erst nach Auftreten eines Befalls oder bereits schon prophylaktisch, zum Beispiel mit der Aussaat oder dem Einpflanzen der jeweiligen Pflanzen, durch Einmischung in das Pflanzensubstrat ausgebracht werden. Vorzugsweise kann hierfür auch ein Pflanzensubstrat verwendet werden, in das die erfindungsgemäßen Flüssigkernkapseln bereits eingemischt sind.

Vorzugsweise werden bei der Ausbringung der Flüssigkernkapseln in den Pflanzenbestand zwischen 1 - 1.000 Flüssigkernkapseln/m² Substratfläche verwendet. Vorzugsweise können zwischen 10 - 500 Flüssigkernkapseln/m² Substratfläche eingesetzt werden. Im Allgemeinen hängt die Dosierung der Flüssigkernkapseln von deren Größe und deren Beladung mit Nematoden ab, die, wie oben ausgeführt, durch Anpassungen im Herstellungsverfahren entsprechend eingestellt werden können. So können die Kapseln beispielsweise derart hergestellt werden, dass sich etwa 50 Mio. EPN in 1 kg Kapseln befinden. Rechnerisch beträgt hierbei die mittlere Kapselanzahl, je nach Beladung der einzelnen Kapseln mit EPN, etwa 6.900 Stück/kg. Im Mittel befinden sich dabei etwa 7.200 EPN in jeder Kapsel. Bei einer bevorzugten Aufwandmenge von 500.000 EPN/m² werden somit 10 g/m² oder dementsprechend 69 Stück/m² an Kapseln ausgebracht.

In besonders bevorzugter Weise werden die erfindungsgemäßen Flüssigkernkapseln in einer Verpackungseinheit mit circa 50 Millionen EPN bereitgestellt. Die 50 Millionen EPN können dabei in circa 32.000 Einzelkapseln verkapselt sein und als Verpackungseinheit mit einem Feuchtgewicht von circa 1,6 kg bereitstellt werden. Pro Kapsel sind in diesem Fall etwa 1.500 bis 1.600 EPN enthalten. Eine solche Verpackungseinheit ist im Allgemeinen für die Behandlung einer Kulturfläche von circa 100 m² oder für circa 2.5 m³ Pflanzsubstrat oder für die Behandlung von circa 5.000 Pflanztöpfen mit einem max. Füllvolumen von 1 I ausreichend. Diese Dosierungsangaben eignen sich insbesondere für einen leichten Anfangsbefall oder eine vorbeugende Behandlung. Je nach Schädlingsbefall und Kulturführung kann eine abweichende Dosierung, insbesondere eine Erhöhung der Dosierung, vorteilhaft sein.

Bei der Einmischung der Flüssigkernkapseln in ein Pflanzsubstrat ist eine gleichmäßige Verteilung der Flüssigkernkapseln vorteilhaft. Wenn die Flüssigkernkapseln direkt auf das Pflanzsubstrat aufgegeben werden, ist es vorteilhaft, die Flüssigkernkapseln mit Pflanzsubstrat zu bedecken, beispielsweise mit einer Schichtdicke von mindestens 2 cm.

Wenn die Einbringung der Flüssigkernkapseln direkt in einen Pflanztopf erfolgen soll, können beispielsweise im Mittel 6 - 7 Kapseln (entspricht circa 10.000 Nematoden) für einen Pflanztopf mit einem max. Füllvolumen von 1 I verwendet werden. Die Dosierung kann beispielsweise mit einem Dosierlöffel mit circa 1 ml Volumen vorgenommen werden.

Da die Herstellung der Flüssigkernkapseln eine Anpassung der Beladung der Nematoden pro Kapsel erlaubt, kann die Beladung der Flüssigkernkapseln mit Nematoden an die gewünschte auszubringende Kapselanzahl angepasst werden. Wenn beispielsweise in ein Pflanzgefäß (zum Beispiel 12 x 12 x 12 cm), von denen etwa 70 Stück auf einem Quadratmeter stehen, jeweils 3 Flüssigkernkapseln eingebracht werden sollen, werden circa 210 Kapseln/m² benötigt. Bei unverändertem Kapselgewicht und bevorzugter Aufwandmenge beträgt in diesem Fall die Konzentration in den Kapseln 16,5 Mio. EPN/kg oder 2.400 EPN/Stück.

Die Bodentemperatur bei der Ausbringung der erfindungsgemäßen Flüssigkernkapseln sollte zweckmäßigerweise nicht unter 4 °C liegen. Beispielsweise können die erfindungsgemäßen Kapseln mit gutem Erfolg ausgebracht werden, wenn die Bodentemperatur mindestens 8 - 12 °C beträgt. Auf der anderen Seite sollte die Bodentemperatur nicht oberhalb von 34 °C liegen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Zeichnungen zeigt:
- Fig. 1: Diagramm zum Gewichtsverlust der erfindungsgemäßen Flüssigkernkapseln (Emulsionskapseln) im Vergleich mit Flüssigkernkapseln mit wässrigem Kern (Wasserkapseln) bei 22 °C und 40 % relativer Luftfeuchtigkeit;
- Fig. 2: Diagramm zum Gewichtsverlust der erfindungsgemäßen Flüssigkernkapseln (Emulsionskapseln) im Vergleich mit Flüssigkernkapseln mit wässrigem Kern (Wasserkapseln) bei 25 °C und 70 % relativer Luftfeuchtigkeit;
- Fig. 3: Diagramm zum Gewichtsverlust der erfindungsgemäßen Flüssigkernkapseln (Emulsionskapseln) im Vergleich mit Flüssigkernkapseln mit wässrigem Kern (Wasserkapseln) bei 4 °C und 40 % relativer Luftfeuchtigkeit;
- Fig. 4: Vitalitätsverlauf der erfindungsgemäß verkapselten Nematoden nach Applikation in einem Pflanzsubstrat;
- Fig. 5: Vergleich der Vitalität der Nematoden in erfindungsgemäßen Flüssigkernkapseln (Emulsionskapseln) und in Flüssigkernkapseln mit wässrigem Kern (Wasserkapseln) im Zeitverlauf bei 100 % relativer Luftfeuchtigkeit;
- Fig. 6: Wirkung der erfindungsgemäß verkapselten Nematoden (*Steinernema carpocapsae*) auf Mehlwürmer als Referenzorganismus im Vergleich mit einer Gießapplikation der Nematoden; und
- Fig. 7: Wirkung der erfindungsgemäß verkapselten Nematoden (*Steinernema feltiae)* auf Mehlwürmer als Referenzorganismus im Vergleich mit einer Gießapplikation der Nematoden.

### Ausführungsbeispiele

### Beispiel 1: Herstellung der Flüssigkernkapseln

Im folgenden Beispiel wird ein bevorzugter Herstellungsprozess für die erfindungsgemäßen Flüssigkernkapseln beschrieben. Für die Vertropfung werden eine Rotarus^{®}-Mehrkanalschlauchpumpe mit acht Schläuchen (Hirschmann, Deutschland), zwei Magnetrührer, Stative, ein Dispergiergerät (ULTRA-TURRAX^{®}, IKA-Werke GmbH & Co. KG, Deutschland), ein mechanischer Rührer, Bechergläser und ein Sieb zum Abtropfen und Spülen der Kapseln bereitgestellt. Alternativ eignet sich für die Herstellung der Flüssigkernkapseln auch eine Vertropfung mittels Düsen, insbesondere für die Herstellung der Flüssigkernkapseln in größerem Maßstab.

In einem bevorzugten Ausführungsbeispiel werden für die Herstellung von etwa 1 kg Flüssigkernkapseln 250 g Sonnenblumenkernöl und 500 g Wasser eingewogen und eine Emulsion mittels ULTRA-TURRAX^{®} hergestellt. Zur Stabilisierung der Emulsion wird ein Emulgator (1,2 Gew.-% E405) zugesetzt. Weiterhin wird noch 3 Gew.-% Calciumchlorid zugesetzt. In einem separaten Becherglas wird ein handelsübliches Nematodenprodukt mit 50 Mio. Tieren in 20 ml Wasser aufgeschwemmt. Das Liefergefäß der Nematoden wird mit 10 ml Wasser gespült und beide Aufschwemmungen vereint. Die 30 ml der Flüssigkeit mit den Nematoden werden der Emulsion zugesetzt und vorsichtig eingerührt, bis eine homogene Mischung entsteht. Das Gefäß mit der resultierenden Flüssigkeit für den Kern wird an einem Stativ befestigt, wobei in dieses Gefäß die acht Schläuche der Mehrkanalpumpe in die Flüssigkeit eintauchen.

Das verwendete Wasser für die Herstellung der Flüssigkeit für den Kern kann mit Sauerstoff angereichert werden. Dies kann sich weiter vorteilhaft auf die Vitalität der Nematoden auswirken. Das mit Sauerstoff angereicherte Wasser kann für die Herstellung der Emulsion und/oder für die Aufschwemmung der Nematoden verwendet werden.

Für die Bereitstellung der Hydrokolloid-Lösung für die Hülle wird 1 Gew.-% Natriumalginat (E401) in Wasser gelöst. Gegebenenfalls werden Additive oder Stabilisatoren zugesetzt, beispielsweise Methylcellulose. Für den Eintropfungsprozess wird die Flüssigkeit für den Kern (Emulsion mit Nematoden) mittels der Schlauchpumpe gefördert. Die Austrittsöffnungen bzw. deren Durchmesser können je nach gewünschter Tropfengröße angepasst werden, wobei verschiedene Schlauchvarianten und/oder zusätzliche Elemente, wie zum Beispiel Pipettenspitzen, eingesetzt werden können. Die Höhe der Schläuche über der vorgelegten Lösung kann je nach Tropfengewicht variiert werden, um möglichst homogene, runde Kapseln zu erhalten. Das Tropfengewicht kann beispielsweise zwischen 10 und 90 mg betragen. Der Durchmesser der Kapseln lässt sich dabei von wenigen Millimetern bis hin zu einigen Zentimetern variieren. Die Kapselhülle bildet sich unmittelbar beim Eintropfen der Flüssigkeit für den Kern in die vorgelegte Hydrokolloid-Lösung aus. Das Calcium in der Kernflüssigkeit reagiert hierbei sofort mit dem Alginat in der vorgelegten Lösung. Hierdurch bildet sich die Hülle und der Tropfen wird in seiner Form direkt stabilisiert. Die Dicke der Hülle kann in Abhängigkeit des Verhältnisses von Calcium zu Alginat, gegebenenfalls plus Additiven, eingestellt werden. Auch die Verweilzeit der Kapseln in der vorgelegten Lösung nach dem Eintropfen kann zur Beeinflussung der Hüllendicke genutzt werden. Die Reaktion endet, wenn sämtliche freie Calciumionen verbraucht sind, oder die Reaktion wird durch Absieben der Kapseln und durch das anschließende Spülen mit Wasser beendet. Die Kapselhülle kann anschließend gegebenenfalls weiter verfestigt werden. Für die Verfestigung können die Kapseln beispielsweise in ein CaCl₂-Bad gelegt werden, sodass die Hydrogelhülle mit Calcium-Ionen gesättigt und dadurch gehärtet wird. Anschließend sind die Flüssigkernkapseln gebrauchsfertig oder können gelagert werden. Zweckmäßigerweise werden die Flüssigkernkapseln für einen Transport portioniert, verpackt und etikettiert.

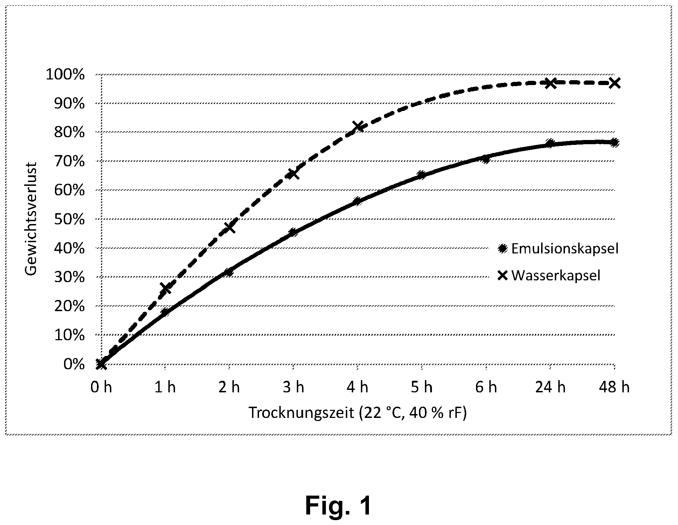

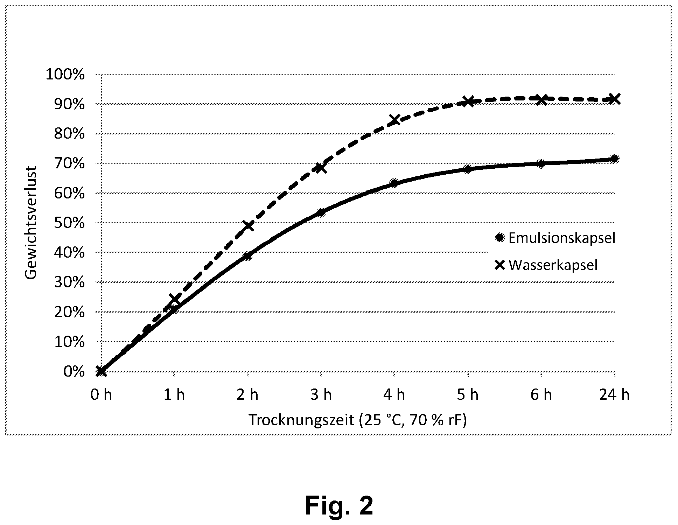

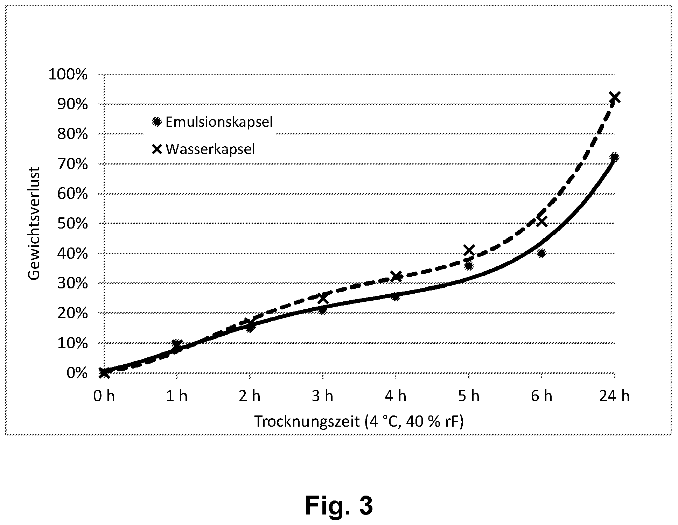

Die auf diese Weise hergestellten Flüssigkernkapseln wurden im Hinblick auf einen Wasserverlust bzw. eine Austrocknung im Vergleich mit Flüssigkernkapseln mit wässrigem Kern untersucht. Mit dem wässrigen Kern ist hierbei gemeint, dass in dem Kern außer den Nematoden nur Wasser enthalten ist. Der Wasserverlust wurde anhand des gemessenen Gewichtsverlusts der Kapseln festgestellt. Für diese Versuche wurden die Kapseln in Petrischalen gegeben und den jeweiligen Bedingungen im Hinblick auf Temperatur und Luftfeuchtigkeit ausgesetzt. **Fig. 1** zeigt den Wasserverlust der Flüssigkernkapseln bei 22 °C und 40 % relativer Luftfeuchtigkeit, **Fig. 2** zeigt den Wasserverlust der Flüssigkernkapseln bei 25 °C und 70 % relativer Luftfeuchtigkeit und **Fig. 3** zeigt den Wasserverlust der Flüssigkernkapseln bei 4 °C und 40 % relativer Luftfeuchtigkeit. Gezeigt ist jeweils der Verlauf des Wasserverlustes bei den erfindungsgemäßen Flüssigkernkapseln (Emulsionskapsel) und Flüssigkernkapseln mit Wasser im Kern (Wasserkapsel). Bei allen getesteten Bedingungen ist deutlich zu erkennen, dass die Austrocknung bei den erfindungsgemäßen Flüssigkernkapseln geringer als bei den Flüssigkernkapseln mit Wasser im Kern ist. Beispielsweise ist bei den Wasserkapseln bei 22 °C und 40 % Luftfeuchtigkeit (Fig. 1) ein Gewichtsverlust von 80 % bereits nach 4 h erreicht. Bei den Emulsionskapseln ist ein Gewichtsverlust von etwas unter 80 % erst nach 24 h zu beobachten. Der Gewichtsverlust ist auf die Verdunstung von Wasser aus der Hülle und dem Kern zurückzuführen. Bei den Wasserkapseln ist nach 24 h ein Wasser- bzw. Gewichtsverlust von nahezu 100 % zu beobachten. Zu diesem Zeitpunkt sind die Wasserkapseln also gewissermaßen ausgetrocknet und stark auf eine rosinenartige Form geschrumpft. Die Emulsionskapseln zeigen auch noch nach 48 h nur einen Gewichtsverlust von etwas unter 80 % und weisen eine runde bis ovale Form auf. Das heißt, dass in den Emulsionskapseln auch zu diesem Zeitpunkt immer noch ein flüssiger Anteil, der maßgeblich von dem Ölanteil der Emulsion gebildet wird, vorhanden ist. Entscheidend hierbei ist, dass auch zu diesem Zeitpunkt noch die Vitalität der Nematoden gegeben ist, wie mikroskopisch beobachtet wurde. Die Vitalität der Nematoden lässt sich auf das noch vorhandene Wasser zurückführen, da diese zumindest mit einem dünnen Film umschlossen sein müssen, um zu überleben. Die Nematoden in den ausgetrockneten Wasserkapseln waren zu diesem Zeitpunkt hingegen nicht mehr vital. Ein sehr ähnlicher Verlauf war bei den Bedingungen mit 25 °C und 70 % Luftfeuchtigkeit zu beobachten (Fig. 2), wobei hier sowohl bei den Wasserkapseln als auch bei den Emulsionskapseln die maximale Verdunstung jeweils etwas niedriger lag. Bei 4 °C (Fig. 3) war die Verdunstung insgesamt bei beiden Kapseltypen deutlich verzögert.

Bei der Bewertung dieser Versuchsergebnisse ist zu beachten, dass die Versuchsanordnung nicht die Gegebenheiten für die Anwendung der Flüssigkernkapseln in einem Pflanzenbestand widerspiegeln. In einem Pflanzenbestand ist bzw. sollte in der Regel eine gewisse Befeuchtung der Flüssigkernkapseln gewährleistet sein, sodass eine vollständige Verdunstung des wässrigen Anteils nicht auftreten sollte. Wie in Anwendungsversuchen in Pflanzenkulturen von den Erfindern gezeigt werden konnte, zeigen die Emulsionskapseln über mehrere Wochen ihre Wirkung, indem fortlaufend Nematoden austreten. Dennoch wäre auch unter trockenen Bedingungen ein deutlicher Vorteil der Emulsionskapseln gegenüber Wasserkapseln gegeben, da die Nematoden bei maximaler Austrocknung der Kapseln durch die Wasser-in-Öl-Emulsion immer noch von einem Wasserfilm umgeben sind und ein gewisses Maß an Vitalität beibehalten.

### Beispiel 2: Untersuchung des Vitalitätsverlaufs der erfindungsgemäß verkapselten Nematoden nach Applikation in einem Pflanzsubstrat

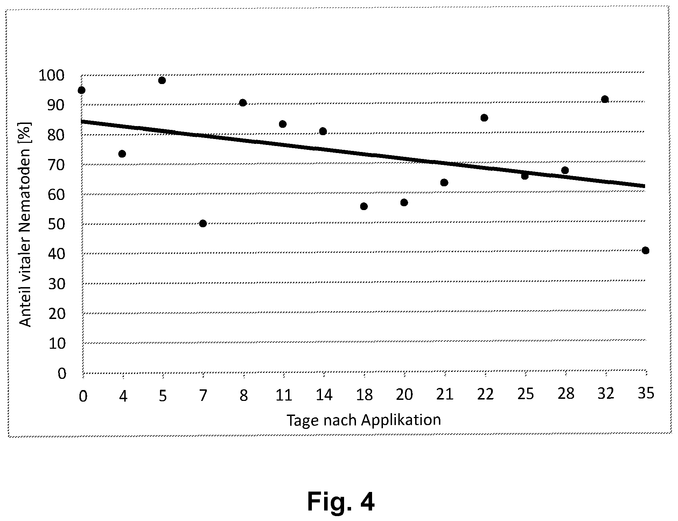

Es wurden Emulsionskapseln mit *Steinernema carpocapsae* gemäß Beispiel 1 hergestellt und mit einem handelsüblichen Pflanzsubstrat (Floradur^{®} B Seed, Floragard Vertriebs-GmbH, Deutschland) gemischt. Nach dieser Applikation wurde das Planzsubstrat bei 25 °C dauerhaft feucht gehalten und die Vitalität der Nematoden über 35 Tage beobachtet. Für jeden untersuchten Zeitpunkt wurden 4 Petrischalen mit Substrat, das mit jeweils 3 Kapseln versetzt wurde, angesetzt. Die Auswertung erfolgte mikroskopisch durch Untersuchung des Substrats, wobei das Verhältnis der vitalen Nematoden zu den erkennbaren Nematoden insgesamt bestimmt wurde. Die Messpunkte in **Fig. 4** repräsentieren Mittelwerte der jeweils betrachteten 4 Schalen. Die Linie stellt eine Regressionsgerade dar. Die Untersuchung zeigt zwar im Mittel eine gewisse Abnahme der Vitalität der Nematoden über einen Zeitraum von 35 Tagen, wobei nach 35 Tagen die Vitalität von anfangs circa 85 % auf circa 60 % absinkt. Dennoch ist auch noch nach 35 Tagen ein erheblicher Anteil von vitalen Nematoden in den Emulsionskapseln vorhanden.

### Beispiel 3: Vergleichende Untersuchung der Vitalität der Nematoden in erfindungsgemäßen Flüssigkernkapseln (Emulsionskapseln) und in Flüssigkernkapseln mit wässrigem Kern (Wasserkapseln) im Zeitverlauf bei 100 % relativer Luftfeuchtigkeit

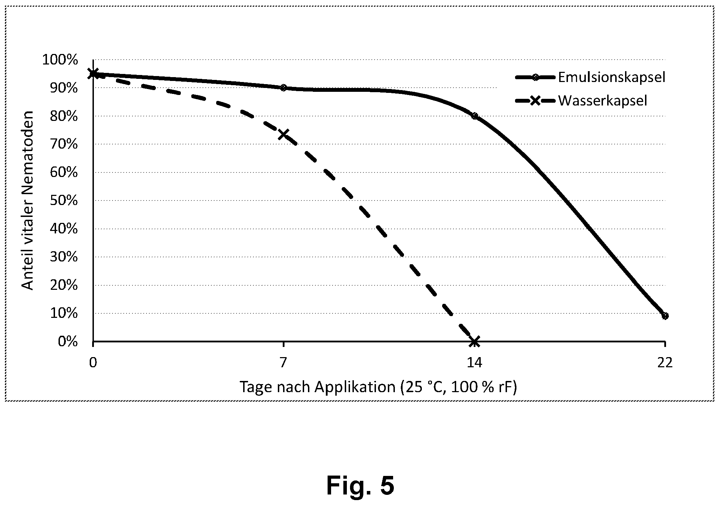

Erfindungsgemäß gemäß Beispiel 1 verkapselte Nematoden (*Steinernema carpocapsae*) (Emulsionskapseln) und vergleichbar hergestellte Kapseln mit einem ausschließlich wässrigen Kern (Wasserkapseln) wurden in Petrischalen (d = 90 mm) bei 25 °C und circa 100 % relativer Luftfeuchtigkeit über einen Zeitraum von 22 Tagen beobachtet. Der Anteil vitaler Nematoden gegenüber dem Gesamtanteil von Nematoden wurde nach 7 Tagen, 14 Tagen und 22 Tagen mikroskopisch bestimmt. Die Ergebnisse sind in **Fig. 5** dargestellt. Bei den hier eingestellten Bedingungen (100 % relative Luftfeuchtigkeit) findet keine maßgebliche Austrocknung der Kapseln statt. Dennoch ist bereits nach 7 Tagen ein deutlicher Unterschied in der Vitalität der Nematoden festzustellen. Während bei den Emulsionskapseln eine Vitalität von circa 90 % zu beobachten ist, sind bei den Wasserkapseln nur noch 70 % der Nematoden vital. Nach 14 Tagen ist die Vitalität der Nematoden bei den Wasserkapseln auf 0 % gesunken. Die Vitalität der Nematoden in den Emulsionskapseln beträgt zu diesem Zeitpunkt noch 80 %, sinkt dann allerdings bis zum Tag 22 auf 10 %. Diese Ergebnisse belegen, dass der Ölanteil selbst in den erfindungsgemäßen Flüssigkernkapseln unabhängig von dessen positivem Einfluss auf eine Austrocknung eine positive Wirkung auf die Vitalität der Nematoden ausübt.

### Beispiel 4: Untersuchung der Wirkung der erfindungsgemäß verkapselten Nematoden (Steinernema carpocapsae, Steinernema feltiae, Heterorhabditis bacteriophora) auf Mehlwürmer als Referenzorganismus im Vergleich mit einer Gießapplikation der Nematoden

Es wurde ein Versuch zur Untersuchung der Wirkung der erfindungsgemäß verkapselten Nematoden (*Steinernema carpocapsae*) im Vergleich mit einer Gießapplikation der Nematoden durchgeführt. Hierfür wurde die Wirkung auf Mehlwürmer untersucht. Bei Mehlwürmern (Larven des Mehlkäfers *Tenebrio molitor*) handelt es sich um einen etablierten Referenzorganismus, um die Wirkung von entomopathogenen Nematoden (EPN) zu analysieren. Für die Versuchsanordnung wurde jeweils 1 I Pflanzsubstrat (Floradur^{®} B Seed, Floragard Vertriebs-GmbH, Deutschland) in Rechteckschalen 170 x 130 x 120 mm (L x B X H) locker eingeschüttet. Für die Flüssigapplikation (Positivkontrolle) wurden 55.000 EPN in Flüssigkeit auf das Substrat gegossen. Als Flüssigkeit wurde für diesen Versuch die Emulsion verwendet, die bei der Herstellung der erfindungsgemäßen Flüssigkernkapseln die Kernlösung repräsentierte. Als Negativkontrolle wurde das Substrat nicht weiter behandelt. Für die Applikation der erfindungsgemäß verkapselten Nematoden wurden durchschnittlich 12 Kapseln mit insgesamt 55.000 EPN, die gemäß Beispiel 1 hergestellt worden waren, in das Substrat eingemischt. Abschließend wurden jeweils 40 Mehlwürmer auf das Substrat aufgesetzt. Dadurch, dass bei der Positivkontrolle gewissermaßen die unverkapselte Kernlösung für die Aufschwemmung der Nematoden eingesetzt wurde, unterscheidet sich der Ansatz mit der Gießapplikation und der Ansatz mit den erfindungsgemäßen Nematodenkapseln ausschließlich durch die Kapselform des Nematodenpräparates. Die Versuchsanordnung wurde über 6 Wochen beobachtet, wobei wöchentlich alle Mehlwürmer entnommen und durch neue Mehlwürmer (40 Mehlwürmer pro Ansatz) ersetzt wurden. Die Applikation der Nematoden erfolgte nur einmalig zum Zeitpunkt Null.

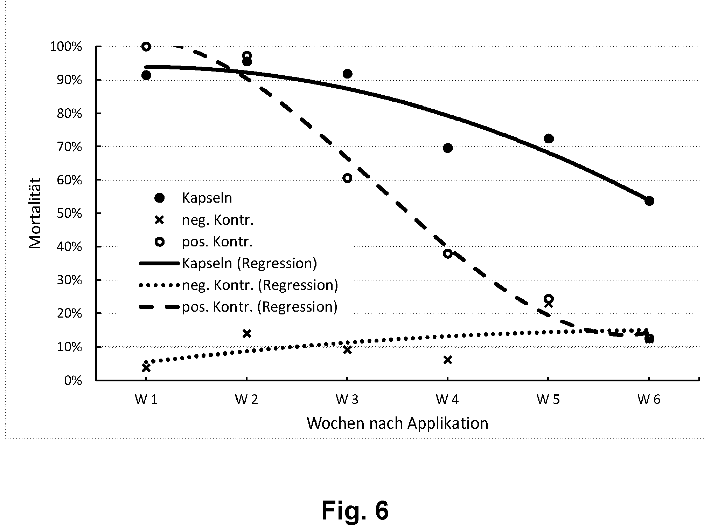

**Fig. 6** zeigt die Versuchsergebnisse, wobei die einzelnen Messpunkte die mittlere Mortalität der Mehlwürmer in Prozent repräsentieren (Wirkungsgrad). Die Linien stellen polynomische Regressionen dar. Die Stichprobengröße bei der Negativkontrolle betrugt n = 53, bei der Positivkontrolle n = 33 und bei dem Ansatz mit den erfindungsgemäß verkapselten Nematoden n = 39. Das heißt, es wurden für die Negativkontrolle insgesamt 53 Versuchsansätze, für die Positivkontrolle insgesamt 33 Versuchsansätze und für den Ansatz mit den erfindungsgemäß verkapselten Nematoden insgesamt 39 Versuchsansätze ausgewertet. In den Wochen 1 und 2 (W 1 und W 2) nach der Applikation der EPN zeigt sich noch kein Unterschied zwischen der Gießapplikation (Positivkontrolle) und der Applikation der erfindungsgemäßen Flüssigkernkapseln. In der Woche 3 (W 3) ist jedoch bei der Gießapplikation nur noch eine Mortalität der Mehlwürmer von 60 % zu beobachten, wohingegen die Mortalität der Mehlwürmer bei den erfindungsgemäßen Flüssigkernkapseln nach wie vor im Bereich um 90 % liegt. In den folgenden Wochen nimmt die Wirkung der Nematoden aus der Gießapplikation auf die Mehlwürmer deutlich ab und sinkt bis zur Woche 6 (W 6) auf nur noch 10 %, was der Negativkontrolle ohne jede Applikation von Nematoden entspricht. Die Wirkung der erfindungsgemäßen Flüssigkernkapseln zum Zeitpunkt W 6 ist hingegen mit einer Mortalität von etwa 55 % noch gegeben. Insgesamt ist daher die Applikation der EPN in Form der erfindungsgemäßen Flüssigkernkapseln einer Gießapplikation deutlich überlegen.

In entsprechender Weise wurden Emulsionskapseln mit *Steinernema feltiae* und *Heterorhabditis bacteriophora* gemäß Beispiel 1 hergestellt und die Wirkung der Emulsionskapseln auf die Mortalität von Mehlwürmern als Referenzorganismus gemäß dem oben beschriebenen Versuchsansatz untersucht.

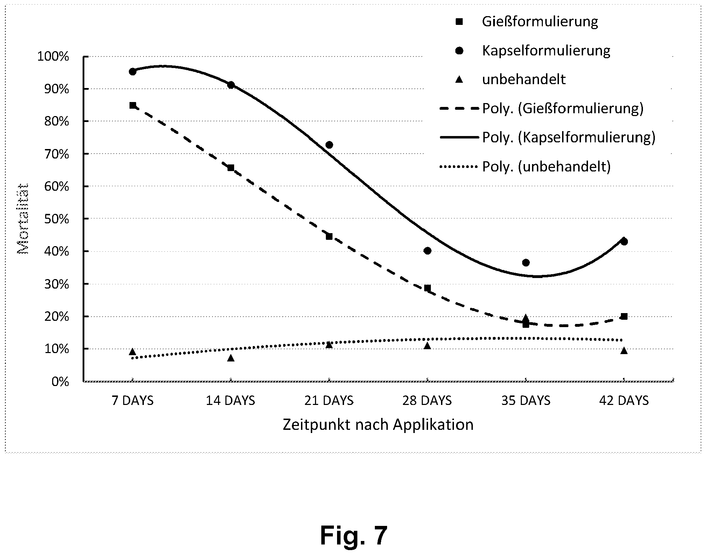

**Fig. 7** zeigt die Versuchsergebnisse mit *Steinernema feltiae,* wobei die einzelnen Messpunkte die mittlere Mortalität der Mehlwürmer in Prozent repräsentieren (Wirkungsgrad). Es wurden Flüssigkernkapseln mit *Steinernema feltiae* im Vergleich zu einer unbehandelten (Negativkontrolle) und einer als Gießformulierung (Positivkontrolle) applizierten Variante untersucht. Testbedingungen: 40 Mehlwürmer, 1 Liter Substrat, 200 cm² Fläche, 2 Liter Gefäß, 25 °C. Dargestellt ist eine Zusammenfassung von 47 Versuchsreihen in dreifacher Wiederholung. Die gefüllten Kreise repräsentieren die mittlere Mortalität nach Applikation von 20 Kapsel mit insgesamt circa 31.000 EPN. Die gefüllten Rechtecke repräsentieren die mittlere Mortalität nach Applikation von circa 31.000 EPN in Flüssigkeit (Gießformulierung). Die gefüllten Dreiecke repräsentieren die mittlere Mortalität ohne Applikation von EPN. Die Linien zeigen die polynomischen Regressionen der jeweiligen Messpunkte

Auch hier zeigte sich (vergleichbar mit Fig. 6), dass die Applikation der EPN in Form der erfindungsgemäßen Flüssigkernkapseln einer Gießapplikation deutlich überlegen ist.

Auch mit *Heterorhabditis bacteriophora* wurden erfindungsgemäße Flüssigkernkapseln gemäß Beispiel 1 hergestellt und im Hinblick auf ihre Wirkung auf Mehlwürmer untersucht (Daten nicht gezeigt). In ersten Versuchen war die Wirkung der Flüssigkernkapseln zumindest vergleichbar mit der Gießapplikation der Nematoden, sodass die Ergebnisse belegen, dass sich auch *Heterorhabditis bacteriophora* wirkungsvoll in Form der erfindungsgemäßen Flüssigkernkapseln applizieren lässt und damit die besonderen Vorteile der erfindungsgemäßen Flüssigkernkapseln beispielsweise im Hinblick auf die Lagerfähigkeit und im Hinblick auf die besonderen Vorteile bei der Applikation im Vergleich mit der herkömmlichen Gießapplikation genutzt werden können.

### Beispiel 5: Anwendung der Flüssigkernkapseln in der Pflanzenkultur

Für die folgenden Anwendungsbeispiele werden Kapseln mit einer mittleren Nematodendichte von circa 2.400 Tieren (*Steinernema carpocapsae* oder *Steinernema feltiae)* pro Flüssigkernkapsel bereitgestellt. Das entspricht etwa 16,5 Mio. EPN/kg Kapseln.

Zur Erstapplikation werden Pflanztöpfe mit Abmessungen 12 x 12 x 12 cm (z.B. Göttinger Viereck-Container) etwa 8 cm hoch mit Pflanzsubstrat (z.B. "Floradur^{®} B Seed", Fa. Floragard) gefüllt. Darin werden die Setzlinge (z.B. Gurken-Jungpflanzen) eingesetzt oder alternativ Saatgut von zu kultivierenden Pflanzen (z.B. Petersilie) aufgestreut. Auf die Substratoberfläche werden drei Flüssigkernkapseln aufgestreut und die Töpfe anschließend mit einer weiterem Substratschicht von etwa 2 cm abgedeckt. Grundsätzlich lassen sich alle erdenklichen Methoden anwenden, mit denen sich die Flüssigkernkapseln auf vergleichbare Weise in das Substrat manuell oder maschinell einarbeiten lassen. Bei der kommerziellen Pflanzenproduktion werden die Flüssigkernkapseln in besonders bevorzugter Weise maschinell in das Substrat eingearbeitet. So lassen sich die Kapseln z.B. mittels Düngerlanzen in das Substrat injizieren. Dieses Verfahren ist bevorzugt zur Applikation in Einzelgefäßen geeignet. Mittels sogenannten Topfmaschinen oder Saatgeräten können die Kapseln auf das Substrat aufgestreut und anschließend mit einer weiteren Substratschicht abgedeckt werden.

Nach der Applikation wird das Substrat mit ausreichend Wasser angegossen, sodass es gleichmäßig befeuchtet ist. Die weitere Pflanzenkultivierung erfolgt in gewohnter Weise, entsprechend den erforderlichen pflanzenspezifischen Bedingungen. Insbesondere sollten möglichst während der gesamten Kultivierungsdauer länger andauernde Trockenphasen im Substrat vermieden werden.

Bei einer Kulturdauer von mehr als 4 Wochen und einem anhaltenden Schädlingsbefall erfolgt eine Nachbehandlung in bevorzugt vierwöchigem Intervall. Es werden etwa drei Kapseln auf einen Pflanztopf aufgestreut und z.B. mit einem Stäbchen oder einem Löffel leicht in das Substrat eingearbeitet, sodass die Kapseln etwa 1 bis 2 cm mit Substrat bedeckt sind. Alternativ lässt sich z.B. mit einem Pflanzstab ein Loch in das Substrat drücken. Die Flüssigkernkapseln werden dann eingelegt und die Löcher wieder mit etwas Substrat verschlossen.

Auch lassen sich die Flüssigkernkapseln mit allen bekannten organischen oder künstlichen Pflanzensubstraten, Austauschstoffen (z.B. Blähton, Vermiculit, Perlite, Steinwolle, Schaumstoffe) oder jeglichen üblichen Mischungen verschiedener Substrate und Austauschstoffe in gleicher Weise verwenden.

### Beispiel 6: Anwendung der Flüssigkernkapseln in Schaumstoffelementen für die Pflanzenkultur

Für diese Anwendungsbeispiele werden Kapseln mit einer mittleren Nematodendichte (*Steinernema carpocapsae* oder *Steinernema feltiae)* von circa 2.400 Tieren pro Flüssigkernkapsel bereitgestellt. Das entspricht etwa 16,5 Mio. EPN/kg Kapseln.

Bei der Kultivierung von Pflanzen (z.B. Orchideen) in zylinderförmigen Schaumstoffelementen (z.B. Durchmesser 7 cm), werden diese vertikal bis etwa zur Mittelachse eingeschnitten. In die entstandene Kerbe wird ein Sprossabschnitt zusammen mit 1 bis 2 Kapseln eingelegt. Das Schaumstoffelement wird dann leicht zusammengedrückt und in ein passendes Gefäß gesetzt (z.B. Rundtöpfe, Durchmesser 6 cm), das die erneute Ausdehnung verhindert und dem Spross so ausreichend Halt bietet.

Nach der Applikation wird das Schaumstoffelement (Substrat) mit ausreichend Wasser angegossen, sodass es gleichmäßig befeuchtet ist. Die weitere Pflanzenkultivierung erfolgt in gewohnter Weise, entsprechend den erforderlichen pflanzenspezifischen Bedingungen. Insbesondere sollten möglichst während der gesamten Kultivierungsdauer länger andauernde Trockenphasen im Substrat vermieden werden.

Bei einer Kulturdauer von mehr als 4 Wochen und einem anhaltenden Schädlingsbefall erfolgt eine Nachbehandlung in bevorzugt vierwöchigem Intervall. Dazu werden die Schaumstoffelemente aus dem Pflanzgefäß entnommen, zwei Flüssigkernkapseln in die Kerbe eingelegt, leicht zusammengepresst und wieder in das Pflanzgefäß eingelegt.

### Beispiel 7: Anwendung der Flüssigkernkapseln bei der Substratherstellung für die Pflanzenkultur

Für dieses Anwendungsbeispiel werden Kapseln mit einer mittleren Nematodendichte (*Steinernema carpocapsae* oder *Steinernema feltiae)* von circa 7.200 Tieren pro Flüssigkernkapsel bereitgestellt. Das entspricht etwa 50 Mio. EPN/kg Kapseln.

Während der Herstellung von Substrat (z.B. "Floradur^{®} Pot Cyclamen/Poinsettia", Fa. Floragard), bei dem die unterschiedlichen Bestandteile gemischt werden (Weißtorf, Schwarztorf, Wasser, Kohlensaurer Kalk, Dünger, Netzmittel), werden anteilig circa 100 g Kapseln pro m³ Substrat in den Mischungsprozess mit eingebracht. In bevorzugter Weise erfolgt die Lieferung der fertigen Mischung vom Substrathersteller zum Anwender innerhalb einer Woche. Anwender sind beispielsweise Betriebe zur Produktion von Zierpflanzen. Die Lieferart erfolgt in herkömmlicher Weiser als Sackware oder als lose Ware. Der Anwender verarbeitet das Substrat in gewohnter Weise, bevorzugt innerhalb von 2 Wochen, z.B. zum Umtopfen von Cyclamen, Topfrosen, Poinsettien oder Hortensien in Pflanztöpfen 12 x 12 x 12 cm. Nach der Verarbeitung befindet sich im Mittel 7.200 EPN in einem Topf, teilweise in der Kapsel vorliegend und teilweise bereits ausgewandert im Substrat verteilt.

### Beispiel 8: Anwendung der Flüssigkernkapseln zur Schneckenbekämpfung

Es werden Kapseln mit Nematoden der Art *Phasmarhabditis hermaphrodita* mit einer Dichte von vorzugsweise circa 1.000 Tieren pro Flüssigkernkapsel bereitgestellt. Das entspricht etwa 7 Mio. EPN/kg Kapseln. Die Menge ist ausreichend zur Behandlung von etwa 100 m² Kulturfläche.

Idealerweise erfolgt die Applikation zum Zeitpunkt erhöhten Schneckenaufkommens, z.B. bei feucht-warmer Witterung und geringer Sonneneinstrahlung. Zur Applikation werden die Flüssigkernkapseln auf den Boden der zu behandelnde Kulturfläche aufgestreut. Im einfachsten Fall und bei kleinen Flächen kann das mit der Hand erfolgen. Für größere Flächen lassen sich geeignete technische Hilfsmittel, z.B. handelsübliche Dünger- oder Saatgutstreuer, verwenden. Die Flüssigkernkapseln werden bevorzugt dort ausgebracht, wo erhöhte Schneckenbewegungen zu erwarten sind, also z.B. um die Kulturen (z.B. Salat) herum, zwischen die Pflanzreihen, an den Rändern der Kulturfläche und an den Rändern zu benachbarten, für Schnecken attraktiven Bereichen, in die sich die Schnecken oft tagsüber und bei Trockenheit zurückziehen. Nach der Applikation wird die Kulturfläche feucht gehalten.

Bei einer Kulturdauer von mehr als 3 Wochen und einem anhaltenden Schneckenbefall erfolgt eine Nachbehandlung in bevorzugt dreiwöchigem Intervall. Die Nachbehandlung erfolgt in gleicher Weise, wie zuvor beschrieben.

### Beispiel 9: Verwendung von Steinernema feltiae in Form von Flüssigkernkapseln zur Bekämpfung der Larven von Trauermücken im Haus- und Gartenbereich oder im Erwerbsgartenbau

Es wurden Flüssigkernkapseln mit den Nematoden *Steinernema feltiae* im Prinzip gemäß Beispiel 1 hergestellt, wobei die in der nachfolgenden Tabelle gezeigte stoffliche Zusammensetzung der Flüssigkernkapseln eingestellt wurde:

| Bezeichnung | E-Nummer | Gewichtsanteil an Gesamtmasse [%] |
|---|---|---|
| Entsalztes Leitungswasser | - | 72,8 |
| Sonnenblumenöl | - | 22,1 |
| Nematoden (Produkt nemaplus^{®}, e-nema GmbH, Deutschland) | - | 3,7 |
| Kalziumchlorid | E509 | < 1 |
| Propylenglycolalginat (gelöst) | E405 | < 1 |
| Natriumalginat (Naturstoff) | E401 | < 1 |

Für die Anwendung beispielsweise im Erwerbsgartenbau wurden Verpackungseinheiten mit 50 Millionen Nematoden bereitgestellt. Jede Verpackungseinheit umfasste etwa 32.000 Einzelkapseln mit einem Gesamtgewicht (Feuchtgewicht) von circa 1,6 kg, wobei dieses Gewicht aufgrund unterschiedlicher Mengen von Wasseranhaftungen gewissen Schwankungen unterworfen war. Die Kapselgröße wies einen durchschnittlichen Durchmesser von 4 - 5 mm auf und die Schütteigenschaften der Kapseln zeigten eine gute Fließfähigkeit.

Die Primärverpackung erfolgte in Folienbeuteln oder Gefäßen aus Kunststoff, die auf einer Seite mit kleinen Löchern zur Sauerstoffversorgung der Nematoden versehen waren. Die Füllhöhe der Flüssigkernkapseln betrug zwischen 5 und 10 cm.

Als Lagerbedingungen eignete sich eine dunkle und kühle Lagerung (4 - 10 °C). Die Lagerfähigkeit betrug zumindest 2 Monate. Während der Lagerung empfahl sich eine regelmäßige Durchmischung der Kapseln beispielsweise durch mehrmaliges Drehen der Gefäße oder Beutel, um die Sauerstoffversorgung der Nematoden zu optimieren. Hierbei empfahl es sich, die gelochten Bereiche der Verpackungen nicht längerfristig abzudecken und aus den Verpackungen austretendes Wasser abtropfen zu lassen.

Die Kapseln wurden mit der Aussaat oder mit dem Setzen von Stecklingen in das Pflanzsubstrat oder in das Setzloch eingebracht. Bei Substratmischungen wurden etwa 50 Millionen Nematoden für 2,5 m³ Substrat verwendet und im Substrat gleichmäßig verteilt. Alternativ wurden Kapseln direkt in den Pflanztopf, beispielsweise in das Setzloch, gegeben, wobei pro Pflanztopf mit max. 1 l Füllvolumen im Mittel 6 - 7 Kapseln, also etwa 10.000 Nematoden pro Topf, verwendet wurden. Alternativ wurden die Kapseln auf das Pflanzsubstrat aufgebracht und mit mindestens 2 cm Substrat bedeckt. Während der Anwendung wurde das Pflanzsubstrat kulturfeucht gehalten.

Diese Mengen wurden bei einem leichten Anfangsbefall oder einer vorbeugenden Behandlung eingesetzt.

Nach dem Einbringen der Kapseln in das Pflanzensubstrat wurde die Hülle der Kapseln nach circa 1 Woche durchlässig und die Nematoden wanderten nach und nach aus. So gelangten über einen Zeitraum von mehreren Wochen immer neue Nematoden in das Substrat und konnten Trauermücken mit dem ersten Auftreten wirksam bekämpfen. Im Vergleich mit einer Ausbringung von Nematoden über das Gießwasser hatte die Behandlung mit den Kapseln eine nahezu verdoppelte Wirkungsdauer und konnte daher auch vorbeugend gegen die Larven der Trauermücken wirken. Die Wirkungsdauer betrug etwa 6 Wochen, wobei die höchste Wirksamkeit zwischen der 2. und 4. Woche nach der Anwendung beobachtet wurde.

## Patentansprüche

1. Flüssigkernkapseln zur Bekämpfung von Schädlingen, wobei die Flüssigkernkapseln einen flüssigen Kern mit entomopathogenen Nematoden und eine umgebende Hydrogel-Hülle aufweisen, **dadurch gekennzeichnet, dass** der flüssige Kern auf der Basis einer Emulsion mit wenigstens einem pflanzlichen Öl und einer wässrigen Flüssigkeit gebildet ist.

2. Flüssigkernkapseln nach Anspruch 1, **dadurch gekennzeichnet, dass** das wenigstens eine pflanzliche Öl Sonnenblumenkernöl und/oder Rapskernöl und/oder Olivenöl ist.

3. Flüssigkernkapsel nach Anspruch 1 oder Anspruch 2, **dadurch gekennzeichnet, dass** der Anteil des Öls an der Emulsion wenigstens 10 % und höchstens 70 % (w/w) beträgt.

4. Flüssigkernkapseln nach einem der vorhergehenden Ansprüche, **dadurch gekennzeichnet, dass** die umgebende Hydrogel-Hülle eine Alginat-Hülle, insbesondere eine Kalziumalginat-Hülle ist.

5. Flüssigkernkapseln nach einem der vorhergehenden Ansprüche, **dadurch gekennzeichnet, dass** die Hydrogel-Hülle wenigstens ein Additiv enthält, insbesondere eine Cellulose-basierte Verbindung, vorzugsweise Methylcellulose, und/oder wenigstens ein Verdickungsmittel, vorzugsweise Xanthan und/oder Johannesbrotkernmehl.

6. Flüssigkernkapseln nach einem der vorhergehenden Ansprüche, **dadurch gekennzeichnet, dass** in den Flüssigkernkapseln im Durchschnitt 1.000 bis 15.000 Nematoden pro Flüssigkernkapsel, vorzugsweise 1.500 bis 7.500 Nematoden pro Flüssigkernkapsel, besonders bevorzugt 1.500 bis 2.000 Nematoden pro Flüssigkernkapsel, enthalten sind.

7. Flüssigkernkapseln nach einem der vorhergehenden Ansprüche, **dadurch gekennzeichnet, dass** die Flüssigkernkapseln im Durchschnitt einen Durchmesser zwischen 1 bis 30 mm, vorzugsweise zwischen 3 bis 10 mm, besonders bevorzugt 3 bis 6 mm, aufweisen.

8. Flüssigkernkapseln nach einem der vorhergehenden Ansprüche, **dadurch gekennzeichnet, dass** die Flüssigkernkapseln im Durchschnitt ein Gewicht pro Flüssigkernkapsel zwischen 10 bis 100 mg, vorzugsweise zwischen 40 bis 80 mg, besonders bevorzugt 40 bis 60 mg, aufweisen.

9. Flüssigkernkapseln nach einem der vorhergehenden Ansprüche, **dadurch gekennzeichnet, dass** die Flüssigkernkapseln weiterhin wenigstens einen Lockstoff für die zu bekämpfenden Schädlinge enthalten, vorzugsweise wenigstens ein ätherisches Öl.

10. Flüssigkernkapseln nach einem der vorhergehenden Ansprüche, **dadurch gekennzeichnet, dass** die Nematoden Vertreter der Arten *Steinernema carpocapsae* und/oder *Steinernema feltiae* und/oder *Steinernema kraussei* und/oder *Heterorhabditis bacteriophora* und/oder *Heterorhabditis downesi* und/oder *Phasmarhabditis hermaphrodita* sind.

11. Pflanzensubstrat, **dadurch gekennzeichnet, dass** es mit Flüssigkernkapseln gemäß einem der Ansprüche 1 bis 10 versetzt ist.

12. Verfahren zur Herstellung von Flüssigkernkapseln gemäß einem der Ansprüche 1 bis 10, **dadurch gekennzeichnet, dass** die Emulsion mit den Nematoden in eine Hydrokolloid-Lösung in Gegenwart von zweiwertigen Ionen eingetropft wird.

13. Verfahren nach Anspruch 12, **dadurch gekennzeichnet, dass** die Emulsion zumindest für den Zeitraum des Eintropfungsprozesses durch die Verwendung von Emulgatoren stabilisiert wird.

14. Verfahren zur Schädlingsbekämpfung, **dadurch gekennzeichnet, dass** Flüssigkernkapseln gemäß einem der Ansprüche 1 bis 10 in einen Pflanzenbestand ausgebracht werden.

15. Verfahren nach Anspruch 14, **dadurch gekennzeichnet, dass** die Flüssigkernkapseln in einer Dosierung zwischen 1 bis 1.000 Flüssigkernkapseln, vorzugsweise zwischen 10 bis 500 Flüssigkernkapseln, pro m² Substratfläche verwendet werden.

## Claims

1. Liquid-core capsules for pest control, wherein the liquid-core capsules have a liquid core comprising entomopathogenic nematodes and a surrounding hydrogel shell, **characterized in that** the liquid core is formed on the basis of an emulsion comprising at least an vegetable oil and an aqueous liquid.

2. The liquid-core capsules according to claim 1, **characterized in that** the at least one vegetable oil is sunflower seed oil and/or rapeseed oil and/or olive oil.

3. The liquid-core capsules according to claim 1 or claim 2, **characterized in that** the proportion of oil in the emulsion is at least 10% and at most 70% (w/w).

4. The liquid-core capsules according to any one of the preceding claims, **characterized in that** the surrounding hydrogel shell is an alginate shell, in particular a calcium alginate shell.

5. The liquid core capsules according to any one of the preceding claims, **characterized in that** the hydrogel shell comprises at least one additive, in particular a cellulose based compound, preferably methyl cellulose, and/or at least one thickener, preferably xanthan and/or locust bean gum.

6. The liquid-core capsules according to any one of the preceding claims, **characterized in that** the liquid-core capsules comprise an average of 1,000 to 15,000 nematodes per liquid-core capsule, preferably 1,500 to 7,500 nematodes per liquid-core capsule, particularly preferably 1,500 to 2,000 nematodes per liquid-core capsule.

7. The liquid core capsules according to any one of the preceding claims, **characterized in that** the liquid-core capsules have an average diameter of between 1 to 30 mm, preferably between 3 to 10 mm, particularly preferably 3 to 6 mm.

8. The liquid-core capsules according to any one of the preceding claims, **characterized in that** the liquid-core capsules have an average weight per liquid-core capsule of between 10 to 100 mg, preferably between 40 to 80 mg, particularly preferably 40 to 60 mg.

9. The liquid-core capsules according to any one of the preceding claims, **characterized in that** the liquid-core capsules further comprise at least one attractant for the pests to be controlled, preferably at least one essential oil.

10. The liquid-core capsules according to any one of the preceding claims, **characterized in that** the nematodes are representatives of the species *Steinemema carpocapsae* and/or *Steinernema feltiae* and/or *Steinernema kraussei* and/or *Heterorhabditis bacteriophora* and/or *Heterorhabditis downesi* and/or *Phasmarhabditis hermaphrodita.*

11. A plant substrate, **characterized in that** liquid-core capsules according to any one of claims 1 to 10 have been added thereto.

12. A method for the production of liquid-core capsules according to any one of claims 1 to 10, **characterized in that** the emulsion comprising the nematodes is dropped into a hydrocolloid solution in the presence of divalent ions.

13. The method according to claim 12, **characterized in that** the emulsion is stabilized at least or the period of the dropping-in process by the use of emulsifiers.

14. A method for controlling pests, **characterized in that** liquid-core capsules according to any one of claims 1 to 10 are applied to a plant stock.

15. The method according to claim 14, **characterized in that** the liquid-core capsules are used in a dosage of between 1 to 1,000 liquid-core capsules, preferably between 10 to 500 liquid-core capsules, per m² of substrate area.

## Revendications

1. Capsules à noyau liquide pour combattre les ravageurs, les capsules à noyau liquide présentant un noyau liquide avec des nématodes entomopathogènes et une enveloppe d'hydrogel périphérique, **caractérisées en ce que** le noyau liquide est formé sur la base d'une émulsion avec au moins une huile végétale et un liquide aqueux.

2. Capsules à noyau liquide selon la revendication 1, **caractérisées en ce que** l'au moins une huile végétale est de l'huile de tournesol, et/ou de l'huile de colza, et/ou de l'huile d'olive.

3. Capsules à noyau liquide selon la revendication 1 ou la revendication 2, **caractérisées en ce que** la proportion d'huile dans l'émulsion est au moins 10 % et au plus 70 % (p/p).

4. Capsules à noyau liquide selon l'une des revendications précédentes, **caractérisées en ce que** l'enveloppe d'hydrogel périphérique est une enveloppe d'alginate, notamment une enveloppe d'alginate de calcium.

5. Capsules à noyau liquide selon l'une des revendications précédentes, **caractérisées en ce que** l'enveloppe d'hydrogel contient au moins un additif, notamment un composé basé sur de la cellulose, de préférence, de la méthylcellulose, et/ou au moins un agent épaississant, de préférence, du xanthane et/ou de la gomme de caroube.

6. Capsules à noyau liquide selon l'une des revendications précédentes, **caractérisées en ce qu'**en moyenne 1000 à 15000 nématodes par capsule à noyau liquide, de préférence 1500 à 7500 nématodes par capsule à noyau liquide, de manière particulièrement préférée 1500 à 2000 nématodes par capsule à noyau liquide sont contenus dans les capsules à noyau liquide.

7. Capsules à noyau liquide selon l'une des revendications précédentes, **caractérisées en ce que** les capsules à noyau liquide présentent en moyenne un diamètre entre 1 et 30 mm, de préférence entre 3 et 10 mm, de manière particulièrement préférée de 3 à 6 mm.

8. Capsules à noyau liquide selon l'une des revendications précédentes, **caractérisées en ce que** les capsules à noyau liquide présentent en moyenne un poids par capsule à noyau liquide entre 10 et 100 mg, de préférence entre 40 et 80 mg, de manière particulièrement préférée de 40 à 60 mg.

9. Capsules à noyau liquide selon l'une des revendications précédentes, **caractérisées en ce que** les capsules à noyau liquide contiennent en outre au moins un agent d'appât pour les ravageurs à combattre, de préférence, au moins une huile éthérée.

10. Capsules à noyau liquide selon l'une des revendications précédentes, **caractérisées en ce que** les nématodes sont des représentants des espèces *Steinernema carpocapsae* et/ou *Steinernema feltiae* et/ou *Steinernema kraussei* et/ou *Heterorhabditis bacteriophora* et/ou *Heterorhabditis downesi* et/ou *Phasmarhabditis hermaphrodita.*

11. Substrat végétal **caractérisé en ce qu'**il est mélangé avec des capsules à noyau liquide selon l'une des revendications 1 à 10.

12. Procédé de fabrication de capsules à noyau liquide selon l'une des revendications 1 à 10, **caractérisé en ce que** l'émulsion avec les nématodes est incorporée sous forme de gouttes dans une solution d'hydro colloïde en présence d'ions bivalents.

13. Procédé selon la revendication 12, **caractérisé en ce que** l'émulsion est stabilisée au moins pour l'intervalle de temps du processus d'incorporation sous forme de gouttes par l'emploi d'émulgateurs.

14. Procédé pour combattre les ravageurs, **caractérisé en ce que** des capsules à noyau liquide selon l'une des revendications 1 à 10 sont appliquées dans un peuplement végétal.

15. Procédé selon la revendication 14, **caractérisé en ce que** les capsules à noyau liquide sont employées dans un dosage entre 1 et 1000 capsules à noyau liquide, de préférence entre 10 et 500 capsules à noyau liquide par m² de surface de substrat.
